(19) Europäisches Patentamt
European Patent Office
Office européen des brevets

(11) Veröffentlichungsnummer: **0 303 934 A1**

# (12) EUROPÄISCHE PATENTANMELDUNG

(21) Anmeldenummer: **88112885.4**

(51) Int. Cl.4: **C07C 131/00 , A01N 37/50**

(22) Anmeldetag: **08.08.88**

(30) Priorität: **20.08.87 DE 3727728**

(43) Veröffentlichungstag der Anmeldung:
**22.02.89 Patentblatt 89/08**

(84) Benannte Vertragsstaaten:
**BE CH DE ES FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Gayer, Herbert, Dr.**
**Alfred-Delp-Strasse 4**
**D-4019 Monheim(DE)**
Erfinder: **Jelich, Klaus, Dr.**
**Pahlkestrasse 5**
**D-5600 Wuppertal 1(DE)**
Erfinder: **Lunkenheimer, Winfried, Dr.**
**Bismarckstrasse 29**
**D-5600 Wuppertal 1(DE)**
Erfinder: **Brandes, Wilhelm, Dr.**
**Eichendorffstrasse 3**
**D-5653 Leichlingen(DE)**

## (54) 2-Cyano-2-oximino-acetamide.

(57) 2-Cyano-2-oximino-acetamide der Formel (I)

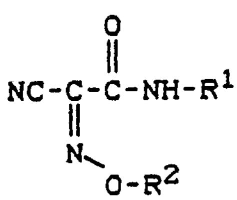

(I)

in welcher
$R^1$ und $R^2$ die in der Beschreibung gegebenen Bedeutungen haben und ihre Verwendung zur Bekämpfung von Schädlingen, weiterhin einige neue Zwischenprodukte. Die neuen 2-Cyano-2-oximino-acetamide der Formel (I) können nach Analogieverfahren hergestellt werden, indem man z.B. geeignete 2-Cyano-2-oximinoessigsäurederivate mit geeigneten Aminen umsetzt oder indem man geeignete Oximinoacetamid-Derivate mit geeigneten Alkylierungsmitteln umsetzt u.a.

EP 0 303 934 A1

## 2-Cyano-2-oximino-acetamide

Die Erfindung betrifft neue 2-Cyano-2-oximino-acetamide, mehrere Verfahren zu ihrer Herstellung und ihre Verwendung als Schädlingsbekämpfungsmittel.

Es ist bereits bekannt, daß bestimmte 2-Cyano-2-oximino-acetamide, wie beispielsweise das 2-Cyano-2-methoximino-acetamid, gute Wirkung gegen Schädlinge, insbesondere gegen pilzliche Schädlinge besitzen (vergl. DE-OS 23 12 956).

Die Wirksamkeit dieser vorbekannten Verbindungen ist jedoch insbesondere bei niedrigen Aufwandmengen und -konzentrationen nicht in allen Anwendungsbereichen völlig zufriedenstellend.

Es wurden neue 2-Cyano-2-oximino-acetamide der allgemeinen Formel (I),

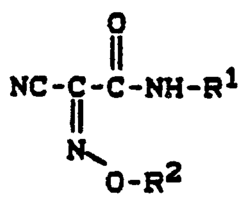

(I)

in welcher

$R^1$ für einen Rest

$-A-\overset{O}{\overset{\|}{C}}-R^3$ oder für einen gegebenenfalls substituierten Rest

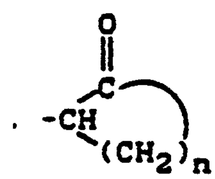

steht und

$R^2$ für Alkyl, Alkenyl, Alkinyl, Halogenalkyl, Halogenalkenyl, Cyanalkyl, Alkoxyalkyl, Alkanoylalkyl, Alkoxycarbonylalkyl, Alkylcarbonyloxyalkyl oder für jeweils gegebenenfalls substituiertes Aralkyl, Cycloalkylalkyl, Heterocyclylalkyl oder Cycloalkyl steht, wobei

A für einen gegebenenfalls substituierten Alkylenrest steht,

n für eine Zahl 2, 3, 4 oder 5 steht und

$R^3$ für Wasserstoff, Alkyl, Alkenyl, Alkinyl, Halogenalkyl, Halogenalkenyl, Cyanalkyl, Alkoxyalkyl, Alkylthioalkyl, Alkanoylalkyl, Hydroxycarbonylalkyl, Alkoxycarbonylalkyl, Alkylcarbonyloxyalkyl, Alkanoylaminoalkyl, Alkoxycarbonylaminoalkyl oder für gegebenenfalls substituiertes Carbamoylalkyl steht;

$R^3$ außerdem für jeweils gegebenenfalls substituiertes Aralkyl, Cycloalkylalkyl oder Heterocyclylalkyl steht und schließlich für jeweils gegebenenfalls substituiertes Aryl, Cycloalkyl, Cycloalkenyl oder Heterocyclyl steht,

gefunden.

Die Verbindungen der Formel (I) können als geometrische und/oder optische Isomere oder Isomerengemische unterschiedlicher Zusammensetzung vorliegen. Sowohl die reinen Isomeren als auch die Isomerengemische werden erfindungsgemäß beansprucht.

Weiterhin wurde gefunden, daß man die neuen 2-Cyano-2-oximino-acetamide der allgemeinen Formel (I),

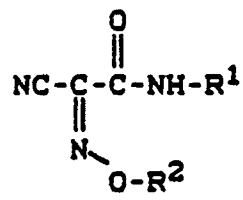

(I)

in welcher
$R^1$ für einen Rest
$-A-\overset{O}{\overset{\|}{C}}-R^3$ oder für einen gegebenenfalls substituierten Rest

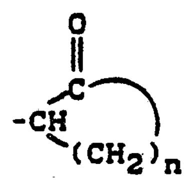

steht,
$R^2$ für Alkyl, Alkenyl, Alkinyl, Halogenalkyl, Halogenalkenyl, Cyanalkyl, Alkoxyalkyl, Alkanoylalkyl, Alkoxycarbonylalkyl, Alkylcarbonyloxyalkyl oder für jeweils gegebenenfalls substituiertes Aralkyl, Cycloalkylalkyl, Heterocyclylalkyl oder Cycloalkyl steht, wobei
A für einen gegebenenfalls substituierten Alkylenrest steht,
n für eine Zahl 2, 3, 4 oder 5 steht und
$R^3$ für Wasserstoff, Alkyl, Alkenyl, Alkinyl, Halogenalkyl, Halogenalkenyl, Cyanalkyl, Alkoxyalkyl, Alkylthioalkyl, Alkanoylalkyl, Hydroxycarbonylalkyl, Alkoxycarbonylalkyl, Alkylcarbonyloxyalkyl, Alkanoylaminoalkyl, Alkoxycarbonylaminoalkyl oder für gegebenenfalls substituiertes Carbamoylalkyl steht;
$R^3$ außerdem für jeweils gegebenenfalls substituiertes Aralkyl, Cycloalkylalkyl oder Heterocyclylalkyl steht und schließlich für jeweils gegebenenfalls substituiertes Aryl, Cycloalkyl, Cycloalkenyl oder Heterocyclyl steht,
nach einem der im Folgenden beschriebenen Verfahren erhält:

So erhält man 2-Cyano-2-oximino-acetamide der allgemeinen Formel (I),

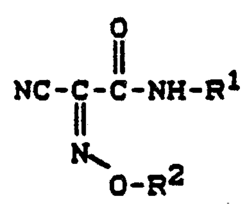

(I)

in welcher
$R^1$ und $R^2$ die oben angegebene Bedeutung haben,
wenn man

(a) 2-Cyano-2-oximinoessigsäurederivate der Formel (II),

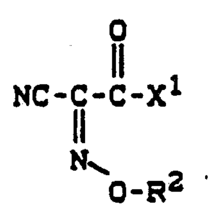

(II)

in welcher
$R^2$ die oben angegebene Bedeutung hat und
$X^1$ für eine geeignete Abgangsgruppe steht,
mit Aminoverbindungen der Formel (III),

$H_2N - R^1$ (III)

in welcher
$R^1$ die oben angegebene Bedeutung hat,
oder deren Säureadditionssalzen gegebenenfalls in Gegenwart eines Verdünnungsmittels, gegebenenfalls in Gegenwart eines Kondensationsmittels und gegebenenfalls in Gegenwart eines Reaktionshilfsmittels umsetzt, oder wenn man

(b) Oximinoacetamid-Derivate der Formel (IV),

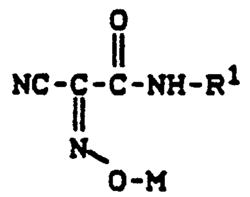

(IV)

in welcher
$R^1$ die oben angegebene Bedeutung hat und
M für Wasserstoff oder für ein Alkalimetallkation steht,
mit Alkylierungsmitteln der Formel (V),

$R^2 - X^2$ (V)

in welcher
$R^2$ die oben angegebene Bedeutung hat und
$X^2$ für eine elektronenanziehende Abgangsgruppe steht,
gegebenenfalls in Gegenwart eines Verdünnungsmittels und gegebenenfalls in Gegenwart eines Reaktionshilfsmittels umsetzt, oder wenn man

(c) Oximinoacetamid-Derivate der Formel (VI),

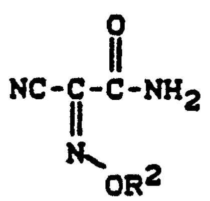

(VI)

in welcher
$R^2$ die oben angegebene Bedeutung hat,
mit Alkylierungsmitteln der Formel (VII),

$R^1 - X^3$ (VII)

in welcher
$R^1$ die oben angegebene Bedeutung hat und
$X^3$ für eine elektronenanziehende Abgangsgruppe steht,
gegebenenfalls in Gegenwart eines Verdünnungsmittels und gegebenenfalls in Gegenwart eines Reaktionshilfsmittels umsetzt.

Man erhält 2-Cyano-2-oximinoacetamide der Formel (Ia),

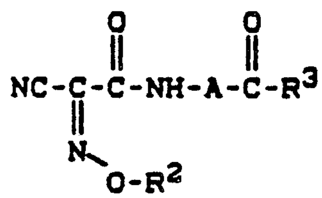

(Ia)

in welcher
$R^2$, $R^3$ und A die oben angegebene Bedeutung haben,
alternativ auch, wenn man

(d) Oximinoacetamid-Derivate der Formel (VIII),

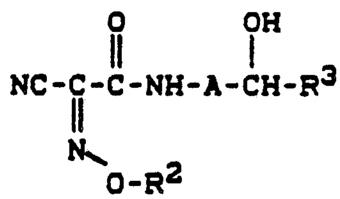

(VIII)

in welcher
$R^2$, $R^3$ und A die oben angegebene Bedeutung haben,
mit einem Oxidationsmittel, gegebenenfalls in Gegenwart eines Verdünnungsmittels und gegebenenfalls in Gegenwart eines Reaktionshilfsmittels umsetzt, oder wenn man

(e) Oximinoacetamido-carbonsäuren der Formel (IX),

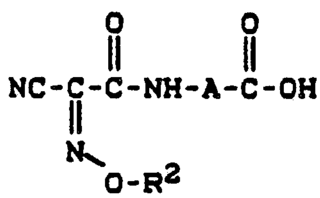

(IX)

in welcher
$R^2$ und A die oben angegebene Bedeutung haben,
mit Carbonsäurederivaten der Formel (X),

$R^3-\overset{\overset{O}{\|}}{C}-X^4$ (X)

in welcher
$X^4$ für Halogen oder für den Rest
$-O-\overset{\overset{O}{\|}}{C}-R^3$ steht
und
$R^3$ die oben angegebene Bedeutung hat,
gegebenenfalls in Gegenwart eines Verdünnungsmittels und gegebenenfalls in Gegenwart eines Reaktionshilfsmittels umsetzt.

Schließlich wurde gefunden, daß die neuen 2-Cyano-2-oximino-acetamide der allgemeinen Formel (I) eine gute Wirkung gegen Schädlinge, insbesondere gegen pilzliche Schädlinge besitzen.

Überraschenderweise zeigen die erfindungsgemäßen 2-Cyano-2-oximino-acetamide der allgemeinen Formel (I) eine erheblich bessere fungizide Wirksamkeit als die aus dem Stand der Technik bekannten 2-Cyano-2-oximino-acetamide, wie beispielsweise das 2-Cyano-2-methoximino-acetamid, welches chemisch und wirkungsmäßig naheliegende Verbindungen sind.

Die erfindungsgemäßen 2-Cyano-2-oximino-acetamide sind durch die Formel (I) allgemein definiert.

Bevorzugt sind Verbindungen der Formel (I), bei welchen
$R^1$ für einen Rest

$-A-\overset{O}{\overset{\|}{C}}-R^3$ oder für einen gegebenenfalls ein- bis mehrfach, gleich oder verschieden substituierten Rest

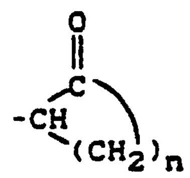

steht,
wobei als Substituenten infrage kommen: geradkettiges oder verzweigtes Alkyl mit 1 bis 4 Kohlenstoffatomen und
$R^2$ für geradkettiges oder verzweigtes Alkyl mit 1 bis 12 Kohlenstoffatomen, für jeweils geradkettiges oder verzweigtes Alkenyl oder Alkinyl mit jeweils 3 bis 8 Kohlenstoffatomen, für geradkettiges oder verzweigtes Halogenalkyl mit 1 bis 8 Kohlenstoffatomen und 1 bis 9 gleichen oder verschiedenen Halogenatomen, für geradkettiges oder verzweigtes Halogenalkenyl mit 3 bis 8 Kohlenstoffatomen und 1 bis 9 gleichen oder verschiedenen Halogenatomen, für jeweils geradkettiges oder verzweigtes Cyanalkyl, Alkoxyalkyl, Alkanoylalkyl, Alkoxycarbonylalkyl oder Alkylcarbonyloxyalkyl mit jeweils 1 bis 6 Kohlenstoffatomen in den einzelnen Alkylteilen oder für gegebenenfalls einfach bis mehrfach, gleich oder verschieden substituiertes Aralkyl mit 6 bis 10 Kohlenstoffatomen im Arylteil und 1 bis 4 Kohlenstoffatomen im geradkettigen oder verzweigten Alkylteil steht, wobei als Substituenten infrage kommen: Halogen, Cyano, Nitro, jeweils geradkettiges oder verzweigtes Alkyl, Alkoxy oder Alkylthio mit jeweils 1 bis 4 Kohlenstoffatomen oder jeweils geradkettiges oder verzweigtes Halogenalkyl, Halogenalkoxy oder Halogenalkylthio mit jeweils 1 bis 4 Kohlenstoffatomen und 1 bis 9 gleichen oder verschiedenen Halogenatomen;
$R^2$ außerdem für gegebenenfalls einfach bis mehrfach, gleich oder verschieden substituiertes Heterocyclylalkyl mit 1 bis 5 Kohlenstoffatomen im geradkettigen oder verzweigten Alkylteil und 2 bis 9 Kohlenstoffatomen und 1 bis 4 Heteroatomen, insbesondere Stickstoff, Sauerstoff und/oder Schwefel, im Heterocyclylteil steht, wobei als Substituenten infrage kommen: Halogen, jeweils geradkettiges oder verzweigtes Alkyl oder Alkoxy mit jeweils 1 bis 4 Kohlenstoffatomen oder jeweils geradkettiges oder verzweigtes Halogenalkyl oder Halogenalkoxy mit jeweils 1 bis 4 Kohlenstoffatom und 1 bis 9 gleichen oder verschiedenen Halogenatomen und für jeweils einfach bis mehrfach, gleich oder verschieden durch Alkyl mit 1 bis 4 Kohlenstoffatomen sub stituiertes Cycloalkylalkyl mit 1 bis 4 Kohlenstoffatomen im Alkylteil und 3 bis 7 Kohlenstoffatomen im Cycloalkylteil oder Cycloalkyl mit 3 bis 7 Kohlenstoffatomen steht, wobei
A für einen geradkettigen oder verzweigten, gegebenenfalls durch gegebenenfalls einfach bis mehrfach, gleich oder verschieden substituiertes Phenyl substituierten Alkylenrest mit 1 bis 6 Kohlenstoffatomen steht, wobei als Phenylsubstituenten gegebenenfalls infrage kommen: Halogen, Cyano, Nitro, jeweils geradkettiges oder verzweigtes Alkyl, Alkoxy oder Alkylthio mit jeweils 1 bis 4 Kohlenstoffatomen oder jeweils geradkettiges oder verzweigtes Halogenalkyl, Halogenalkoxy oder Halogenalkylthio mit jeweils 1 bis 4 Kohlenstoffatomen und gegebenenfalls 1 bis 9 gleichen oder verschiedenen Halogenatomen,
n für eine Zahl 2, 3, 4 oder 5 steht und
$R^3$ für Wasserstoff, für geradkettiges oder verzweigtes Alkyl mit 1 bis 12 Kohlenstoffatomen, für jeweils geradkettiges oder verzweigtes Alkenyl oder Alkinyl mit jeweils 3 bis 8 Kohlenstoffatomen, für geradkettiges oder verzweigtes Halogenalkyl mit 1 bis 8 Kohlenstoffatomen und 1 bis 9 gleichen oder verschiedenen Halogenatomen, für geradkettiges oder verzweigtes Halogenalkenyl mit 3 bis 8 Kohlenstoffatomen und 1 bis 9 gleichen oder verschiedenen Halogenatomen, für jeweils geradkettiges oder verzweigtes Cyanalkyl, Alkoxyalkyl, Alkylthioalkyl, Alkanoylalkyl, Hydroxycarbonylalkyl, Alkoxycarbonylalkyl, Alkylcarbonyloxyalkyl, Alkanoylaminoalkyl oder Alkoxycarbonylaminoalkyl mit jeweils 1 bis 6 Kohlenstoffatomen in den einzelnen Alkylteilen, für gegebenenfalls einfach oder zweifach am Stickstoff durch geradkettiges oder verzweigtes Alkyl mit 1 bis 4 Kohlenstoffatomen, durch geradkettiges oder verzweigtes, zweifach verknüpftes Alkylen mit 4 bis 9 Kohlenstoffatomen oder durch geradkettiges oder verzweigtes, zweifach verknüpftes Heteroalkylen mit 4 bis 8 Kohlenstoffatomen und Sauerstoff, Schwefel oder einer NH-Gruppe als Heteroatom substituiertes Carbamoylalkyl mit 1 bis 4 Kohlenstoffatomen im geradkettigen oder verzweigten Alkylteil steht oder für gegebenenfalls einfach bis mehrfach, gleich oder verschieden substituiertes Aralkyl mit 6 bis 10 Kohlenstoffatomen im Arylteil und 1 bis 4 Kohlenstoffatomen im geradkettigen oder verzweigten Alkylteil steht,

wobei als Substituenten infrage kommen: Halogen, Cyano, Nitro, jeweils geradkettiges oder verzweigtes Alkyl, Alkoxy oder Alkylthio mit jeweils 1 bis 4 Kohlenstoffatomen, jeweils geradkettiges oder verzweigtes Halogenalkyl, Halogenalkoxy oder Halogenalkylthio mit jeweils 1 bis 4 Kohlenstoffatomen und 1 bis 9 gleichen oder verschiedenen Halogenatomen;

$R^3$ außerdem für gegebenenfalls einfach bis mehrfach, gleich oder verschieden substituiertes Heterocyclylalkyl mit 1 bis 4 Kohlenstoffatomen im geradkettigen oder verzweigten Alkylteil und 2 bis 9 Kohlenstoffatomen und 1 bis 4 Heteroatomen, insbesondere Stickstoff, Sauerstoff und/oder Schwefel, im Heterocyclylteil steht, wobei als Substituenten infrage kommen: Halogen, jeweils geradkettiges oder verzweigtes Alkyl oder Alkoxy mit jeweils 1 bis 4 Kohlenstoffatomen, jeweils geradkettiges oder verzweigtes Halogenalkyl oder Halogenalkoxy mit jeweils 1 bis 4 Kohlenstoffatomen und 1 bis 9 gleichen oder verschiedenen Halogenatomen; $R^3$ außerdem für einfach bis mehrfach, gleich oder verschieden durch Alkyl mit 1 bis 4 Kohlenstoffatomen substituiertes Cycloalkylalkyl mit 1 bis 4 Kohlenstoffatomen im Alkylteil und 3 bis 7 Kohlenstoffatomen im Cycloalkylteil steht;

$R^3$ außerdem für jeweils gegebenenfalls einfach bis mehrfach, gleich oder verschieden durch geradkettiges oder verzweigtes Alkyl mit 1 bis 4 Kohlenstoffatomen substituiertes, gegebenenfalls verbrücktes oder gegebenenfalls mit ein oder zwei Carbo- und/oder Heterocyclen anelliertes Cycloalkyl oder Cycloalkenyl mit jeweils 3 bis 10 Kohlenstoffatomen steht;

$R^3$ außerdem für gegebenenfalls einfach bis mehrfach, gleich oder verschieden substituiertes, gegebenenfalls mit ein oder zwei Carbo-und/oder Heterocyclen anelliertes Aryl mit 6 bis 10 Kohlenstoffatomen steht, wobei als Substituenten infrage kommen: Halogen, Cyano, Nitro, jeweils geradkettiges oder verzweigtes Alkyl, Alkoxy, Alkylthio oder Alkanoylamino mit jeweils 1 bis 4 Kohlenstoffatomen, jeweils geradkettiges oder verzweigtes Halogenalkyl, Halogenalkoxy oder Halogenalkylthio mit jeweils 1 bis 4 Kohlenstoffatomen und gegebenenfalls 1 bis 9 gleichen oder verschiedenen Halogenatomen und schließlich $R^3$ für gegebenenfalls einfach bis mehrfach, gleich oder verschieden substituiertes, gegebenenfalls mit ein oder zwei Carbo- und/oder Heterocyclen anelliertes Heterocyclyl mit 2 bis 6 Kohlenstoffatomen und 1 bis 4 Heteroatomen, insbesondere Stickstoff, Sauerstoff und/oder Schwefel steht, wobei als Substituenten infrage kommen: Halogen, jeweils geradkettiges oder verzweigtes Alkyl, Alkoxy, Alkylthio oder Alkanoylamino mit jeweils 1 bis 4 Kohlenstoffatomen oder Phenyl.

Besonders bevorzugt sind Verbindungen der Formel (I), bei welchen

$R^1$ für einen Rest

$-A-\overset{O}{\overset{\|}{C}}-R^3$ oder für einen gegebenenfalls ein- bis dreifach durch Methyl substituierten Rest

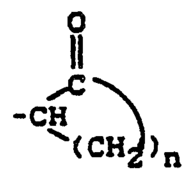

steht,

$R^2$ für Methyl, Ethyl, n- oder i-Propyl, n-, i-, s-oder t-Butyl, für jeweils geradkettiges oder verzweigtes Pentyl, Hexyl, Heptyl oder Octyl, für Vinyl, Allyl, für jeweils geradkettiges oder verzweigtes 1-Butenyl oder 2-Butenyl, für Ethinyl, Propargyl, für jeweils geradkettiges oder verzweigtes 1-Butinyl oder 2-Butinyl, für Chlorallyl, Bromallyl, Chlorbutenyl, Cyanmethyl, Cyanethyl, Methoxymethyl, Ethoxymethyl, Methoxyethyl, Ethoxyethyl, für Methoxycarbonylmethyl, Ethoxycarbonylmethyl, Methoxycarbonylethyl, Ethoxycarbonylethyl, für Acetylmethyl, für Propionylmethyl, für Acetylethyl, für Propionylethyl, für Acetoxymethyl, Acetoxyethyl, Propionyloxymethyl, Propionyloxyethyl oder für jeweils gegebenenfalls ein- bis dreifach, gleich oder verschieden substituiertes Benzyl oder Phenylethyl steht, wobei als Substituenten der Phenylringe infrage kommen: Fluor, Chlor, Brom, Methyl, Ethyl, n- oder i-Propyl, n-, i-, s- oder t-Butyl, Methoxy, Ethoxy, Methylthio, Trifluormethyl, Trifluormethoxy oder Trifluormethylthio und

$R^2$ außerdem für jeweils gegebenenfalls ein- bis dreifach durch Methyl substituiertes Cyclopropyl, Cyclopropylmethyl, Cyclopentyl, Cyclohexyl oder Cyclohexylmethyl steht,

A für einen gegebenenfalls substituierten Rest der Formel $-CH_2-$, $-CH_2-CH_2-$, $-CH(CH_3)-$, $-CH_2-CH_2-CH_2-$ oder $-CH(CH_3)-CH_2-$ steht, wobei als Substituenten gegebenenfalls ein- bis dreifach durch Fluor, Chlor, Brom, Methyl, Methoxy, Methylthio und/oder Trifluormethyl substituierte Phenylreste infrage kommen,

n für eine Zahl 3 oder 4 steht und

$R^3$ für Wasserstoff, für Methyl, Ethyl, n- oder i-Propyl, n-, i-, s- oder t-Butyl, für jeweils geradkettiges oder verzweigtes Pentyl, Hexyl, Heptyl oder Octyl, für Vinyl, Allyl, für 1-Propenyl oder 2-Propenyl, für jeweils geradkettiges oder verzweigtes 1-Butenyl oder 2-Butenyl, für Propargyl, für jeweils geradkettiges oder verzweigtes 1-Butinyl oder 2-Butinyl, für Trifluormethyl, Trichlormethyl, Dichlorfluormethyl, Difluorchlormethyl, Chlormethyl, Dichlormethyl, Chlorethyl, Bromethyl, Trichlorethyl, Pentachlorethyl, Trifluorethyl, Pentafluorethyl oder Heptafluorpropyl, für Chlorallyl, Bromallyl, Chlorbutenyl, Cyanmethyl, Cyanethyl, Methoxymethyl, Ethoxymethyl, Methoxyethyl, Ethoxyethyl, Methylthio methyl, für Hydroxycarbonylmethyl, Methylthioethyl, Hydroxycarbonylethyl, Methoxycarbonylmethyl, Ethoxycarbonylmethyl, Methoxycarbonylethyl, Ethoxycarbonylethyl, für Acetylmethyl, für Propionylmethyl, für Acetylethyl, für Propionylethyl, für Acetoxymethyl, Acetoxyethyl, Propionyloxymethyl, Propionyloxyethyl, für Acetamidomethyl, Acetamidoethyl, Propionamidomethyl, Propionamidoethyl, für Methoxycarbonylaminomethyl, Ethoxycarbonylaminomethyl, Butoxycarbonylaminomethyl, Methoxycarbonylaminoethyl, Ethoxycarbonylaminoethyl, für jeweils gegebenenfalls einfach oder zweifach am Stickstoff durch Methyl, Ethyl, n- oder i-Propyl oder n-, i-, s- oder t-Butyl substituiertes Carbamoylmethyl oder Carbamoylethyl, für gegebenenfalls ein- bis vierfach durch Methyl substituiertes 1-Pyrrolidinylcarbonylmethyl, 1-Piperidinylcarbonylmethyl oder 4-Morpholinylcarbonylmethyl steht; $R^3$ außerdem für gegebenenfalls ein- bis dreifach, gleich oder verschieden substituiertes Benzyl oder Phenylethyl steht, wobei als Substituenten infrage kommen: Fluor, Chlor, Brom, Methyl, Ethyl, n- oder i-Propyl, n-, i-, s- oder t-Butyl, Methoxy, Ethoxy, Methylthio, Trifluormethyl, Trifluormethoxy oder Trifluormethylthio, $R^3$ außerdem für jeweils gegebenenfalls ein- bis dreifach durch Methyl substituiertes und/oder durch jeweils zweifach verknüpftes Methylen, Ethylen, Propylen oder Butylen überbrücktes und/oder benzanelliertes Cyclopropyl, Cyclopropylmethyl, Cyclopentyl, Cyclohexyl, Cyclohexenyl oder Cyclohexylmethyl steht;

$R^3$ weiterhin für jeweils gegebenenfalls ein- bis dreifach, gleich oder verschieden substituiertes Phenyl oder Naphthyl steht, wobei als Substituenten jeweils infrage kommen: Fluor, Chlor, Brom, Cyano, Nitro, Methyl, Ethyl, n- oder i-Propyl, n-, i-, s-oder t-Butyl, Methoxy, Ethoxy, n- oder i-Propoxy, Methylthio, Acetamido, Propionamido, Trifluormethyl, Trifluormethoxy oder Trifluormethylthio oder

$R^3$ schließlich für einen jeweils gegebenenfalls ein-bis dreifach, gleich oder verschieden substituierten Heterocyclylmethyl-, Heterocyclylethyl- oder Heterocyclylrest steht, wobei als Heterocyclen jeweils infrage kommen:

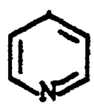 ; 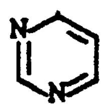 ; 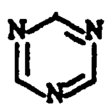 ; 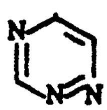 ; 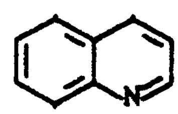 ;

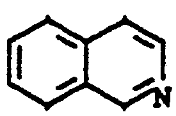 ; 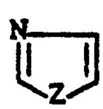 ; 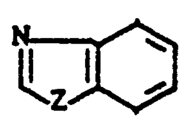 ; 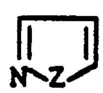 ;

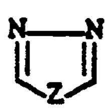 ; 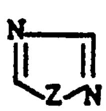 ; 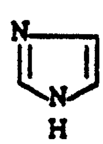 ; 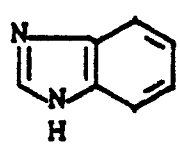 ;

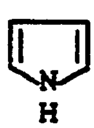 ; 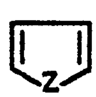 ; 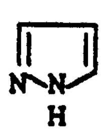 ; 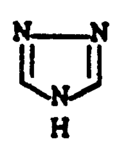 ; 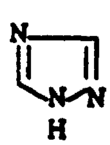 ;

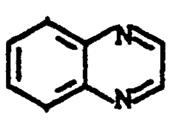 ; 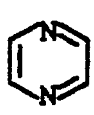 ; 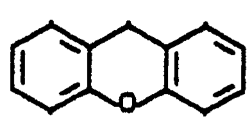 ; 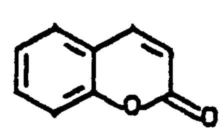

oder

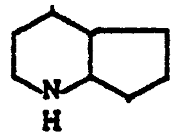,

wobei Z jeweils für Sauerstoff oder Schwefel steht und wobei als Substituenten jeweils infrage kommen: Fluor, Chlor, Brom, Methyl, Methoxy, Methylthio, Phenyl und Acetamido.

Ganz besonders bevorzugt sind Verbindungen der Formel (I), bei welchen

$R^1$ für einen Rest

$-A-\overset{\overset{O}{\|}}{C}-R^3$ oder für einen Rest

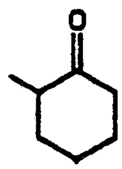 oder 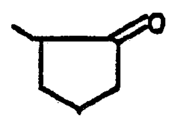

steht,

$R^2$ für Methyl, Ethyl, n- oder i-Propyl, n-, i-, s-oder t-Butyl, Allyl, n- oder i-Butenyl, Chlorbutenyl, Propargyl, n- oder i-Butinyl, Cyanmethyl, Cyanethyl, Methylcarbonylmethyl, Methoxycarbonylmethyl, Ethoxycarbonylmethyl, Methylcarbonyloxyethyl, Ethylcarbonyloxyethyl oder für gegebenenfalls ein- bis dreifach, gleich oder verschieden substituiertes Benzyl steht, wobei als Substituenten genannt seien: Chlor, Methyl, Methoxy, Methylthio oder Trifluormethyl,

A für einen Rest der Formel $-CH_2-$ ; $-CH_2-CH_2-$;

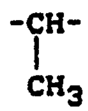 oder 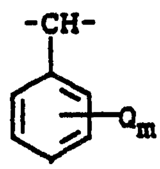

steht,

wobei Q für Chlor, Methyl, Methoxy, Methylthio oder Trifluormethyl steht und m für eine Zahl 0, 1 oder 2 steht und

$R^3$ für Wasserstoff, Methyl, Ethyl, n- oder i-Propyl, n-, i-, s- oder t-Butyl, n- oder i-Pentyl, n- oder i-Hexyl, Vinyl, 1-Propenyl, 2-Propenyl, Allyl, Propargyl, Trifluormethyl, Chlormethyl, Dichlormethyl, Methoxymethyl, Hydroxycarbonylmethyl, Methoxycarbonylmethyl, Ethoxycarbonylmethyl, Hydroxycarbonylethyl, Methoxycarbonylethyl, Ethoxycarbonylethyl, Methoxycarbonylaminomethyl, Ethoxycarbonylaminomethyl, Butoxycarbonylaminomethyl, für N,N-Dimethylcarbamoylmethyl, N,N-Diethylcarbamoylmethyl, für gegebenenfalls ein- bis zweifach durch Chlor oder Methyl substituiertes Benzyl, für Cyclopropyl, Cyclopentyl, Cyclohexyl oder für gegebenenfalls ein- bis dreifach, gleich oder verschieden substituiertes Phenyl steht, wobei als Substituenten infrage kommen: Fluor, Chlor, Brom, Methyl, Ethyl, Methoxy, Ethoxy, Methylthio, Acetamido oder Trifluormethyl oder für jeweils gegebenenfalls ein-oder zweifach durch Chlor und/oder Methyl substituiertes Furanyl, Thienyl oder Pyridyl steht.

Im einzelnen seien außer den bei den Herstellungsbeispielen genannten Verbindungen die folgenden 2-Cyano-2-oximino-acetamide der allgemeinen Formel (I) genannt:

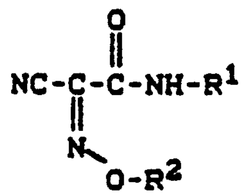

(I)

| $R^1$ | $R^2$ | $R^1$ | $R^2$ |
|---|---|---|---|
| 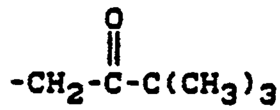 | $CH_3$ | 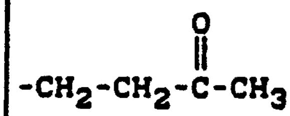 | $CH_3$ |
| 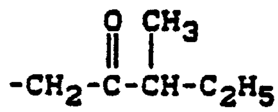 | $CH_3$ | 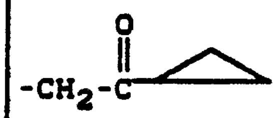 | $CH_3$ |
| 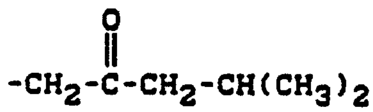 | $CH_3$ | 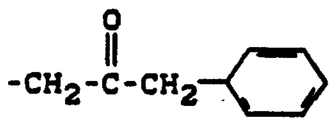 | $CH_3$ |
| 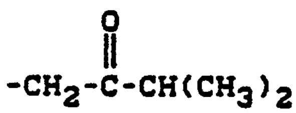 | $CH_3$ | 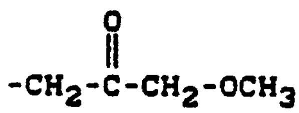 | $CH_3$ |
| 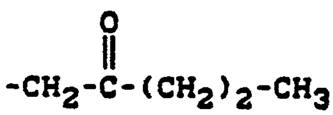 | $CH_3$ | 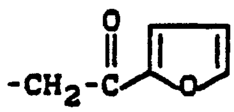 | $CH_3$ |
| 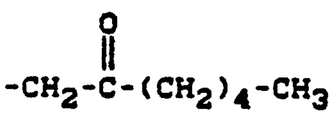 | $CH_3$ | 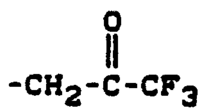 | $CH_3$ |
| 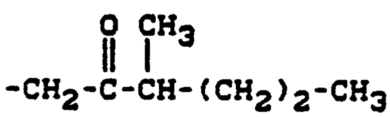 | $CH_3$ | 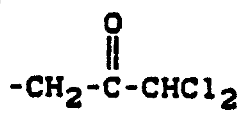 | $CH_3$ |
| 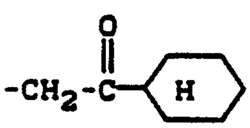 | $CH_3$ | 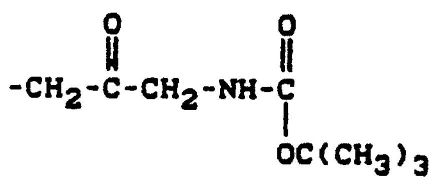 | $CH_3$ |

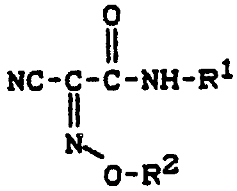 (I)

| $R^1$ | $R^2$ | $R^1$ | $R^2$ |
|---|---|---|---|
| 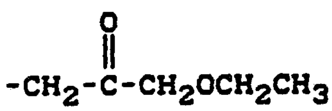 | 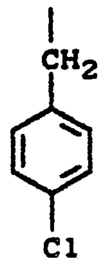 | 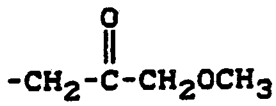 | 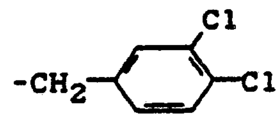 |
| 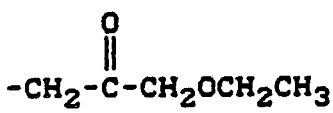 | 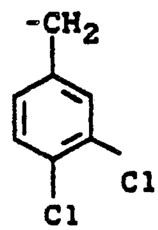 | 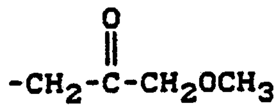 | 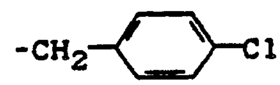 |
| 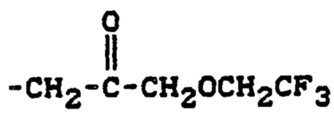 | $CH_3$ | 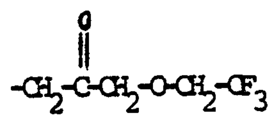 | 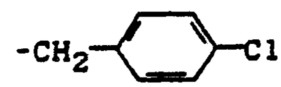 |
| | | 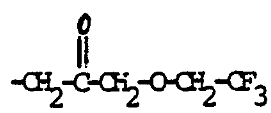 | 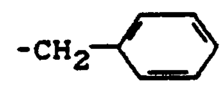 |
| | | 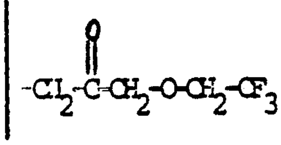 | 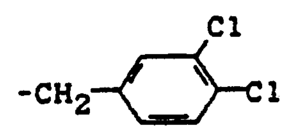 |

| $R^1$ | $R^2$ | $R^1$ | $R^2$ |
|---|---|---|---|
| 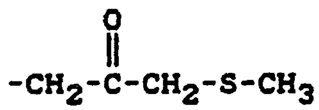 | $CH_3$ | 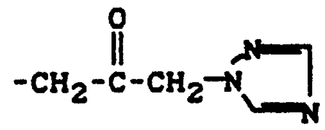 | $CH_3$ |
| 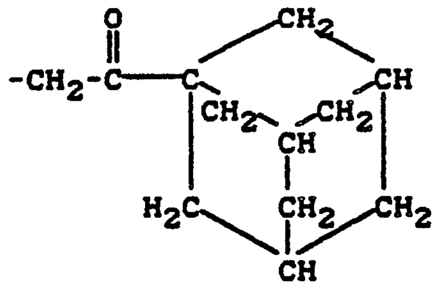 | $CH_3$ | 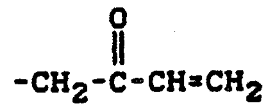 | $CH_3$ |
| 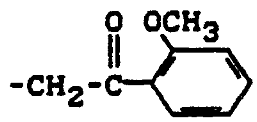 | $CH_3$ | 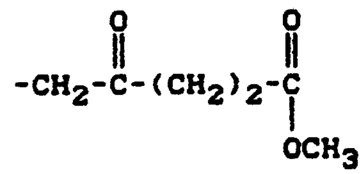 | $CH_3$ |
| 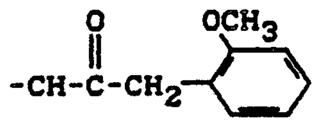 | $CH_3$ | | |

Verwendet man beispielsweise 2-Cyano-2-methoximino-acetylchlorid und 2-Aminocyclohexanon Hydrochlorid als Ausgangsstoffe, so läßt sich der Reaktionsablauf des erfindungsgemäßen Verfahrens (a) durch das folgende Formelschema darstellen:

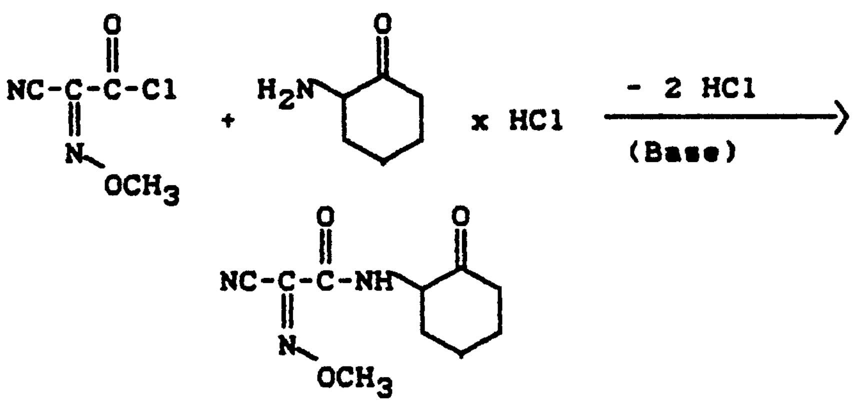


Verwendet man beispielsweise 3-(2-Cyano-2-hydroximino-acetamido)-butan-2-on und Allylbromid als Ausgangsstoffe, so läßt sich der Reaktionsablauf des erfindungsgemäßen Verfahrens (b) durch das folgende Formelschema darstellen:

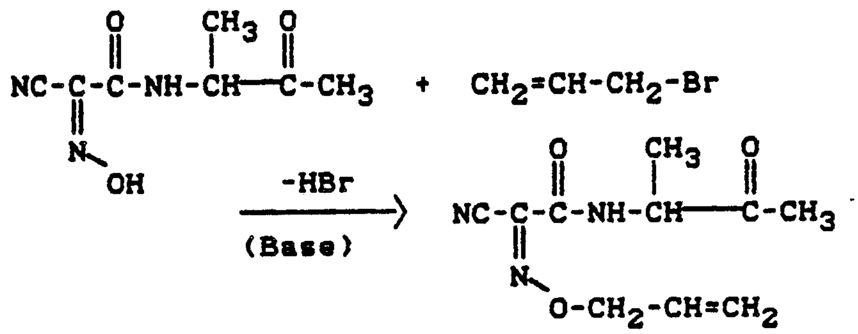


Verwendet man beispielsweise 2-Cyano-2-ethoximino-acetamid und Bromaceton als Ausgangsstoffe, so läßt sich der Reaktionsablauf des erfindungsgemäßen Verfahrens (c) durch das folgende Formelschema darstellen:

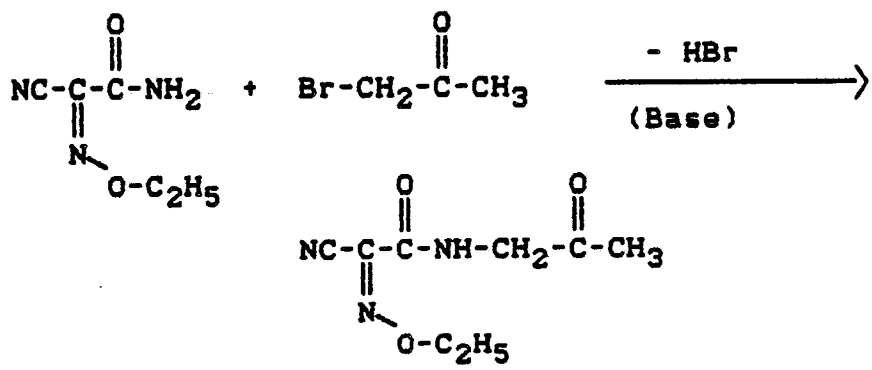


Verwendet man beispielsweise 1-(2-Cyano-2-methoximino-acetamido)-3-ethyl-pentan-2-ol als Ausgangsstoff und Oxalylchlorid/Dimethylsulfoxid als Oxidationsmittel, so läßt sich der Reaktionsablauf des erfindungsgemäßen Verfahrens (d) durch das folgende Formelschema darstellen:

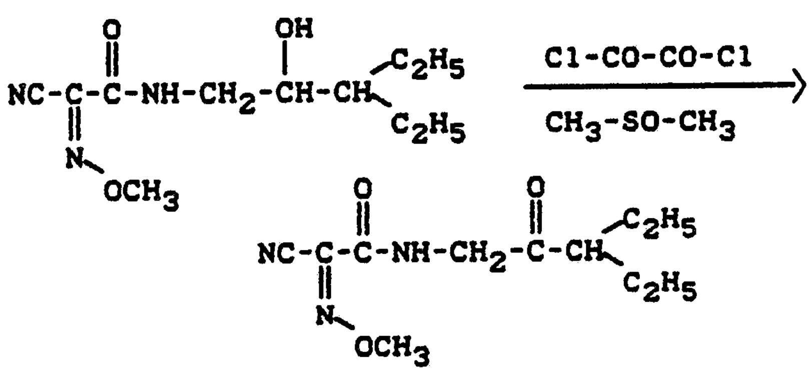


Verwendet man beispielsweise 2-(2-Cyano-2-methoximino-acetamido)-essigsäure und Isobuttersäureanhydrid als Ausgangsstoffe, so läßt sich der Reaktionsablauf des erfindungsgemäßen Verfahrens (e) durch das folgende Formelschema darstellen:

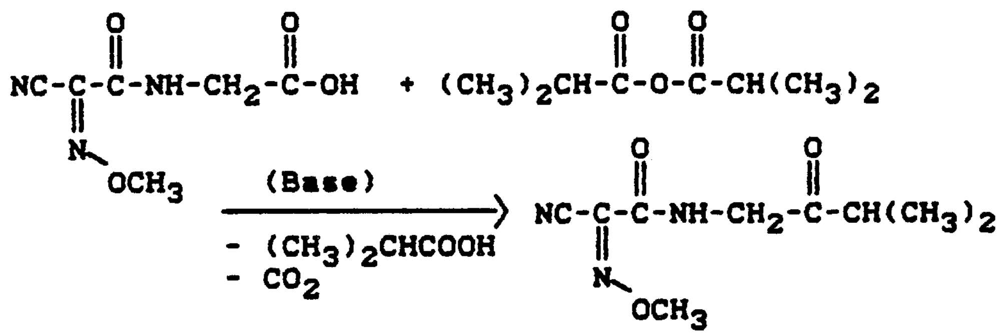


Die zur Durchführung des erfindungsgemäßen Verfahrens (a) als Ausgangsstoffe benötigten 2-Cyano-2-oximinoessigsäurederivate sind durch die Formel (II) allgemein definiert. In dieser Formel (II) steht $R^2$ vorzugsweise für diejenigen Reste, die bereits im Zusammenhang mit der Beschreibung der erfindungsgemäßen Stoffe der Formel (I) als bevorzugt für diesen Substituenten genannt wurden.

$X^1$ steht vorzugsweise für Halogen, insbesondere für Chlor oder Brom, für Alkoxy, insbesondere Methoxy oder Ethoxy, für eine Azidogruppe, für einen Anhydridrest, wie beispielsweise ein Ethoxycarbonyloxyrest, für einen Aktivesterrest, wie beispielsweise ein 4-Nitrophenoxyrest, ein N-Oxybenzotriazolrest oder ein N-Oxysuccinimidrest oder für eine mit üblichen Kondensationsmitteln, wie beispielsweise N,N′-Dicyclohexylcarbodiimid oder Carbonyldiimidazol, aus dem freien Carbonsäurerest in situ erzeugte aktivierende Gruppe.

Die 2-Cyano-2-oximinoessigsäurederivate der Formel (II) sind bekannt oder können in Analogie zu bekannten Verfahren erhalten werden (vergl. z.B. Pesticide Science 12, 27 [1981] oder DE-OS 35 21 131).

Die zur Durchführung des erfindungsgemäßen Verfahrens (a) weiterhin als Ausgangsstoffe benötigten Aminoverbindungen bzw. deren Säureadditionssalze sind durch die Formel (III) allgemein definiert. In dieser Formel (III) steht $R^1$ vorzugsweise für diejenigen Reste, die bereits im Zusammenhang mit der Beschreibung der erfindungsgemäßen Stoffe der Formel (I) als bevorzugt für diesen Substituenten genannt wurden.

Die Aminoverbindungen der Formel (III) und deren Säureadditionssalze wie beispielsweise Hydrochloride, Hydrobromide oder Hydroacetale sind allgemein bekannte Verbindungen der organischen Chemie.

Die zur Durchführung des erfindungsgemäßen Verfahrens (b) als Ausgangsstoffe benötigten Oximinoacetamid-Derivate sind durch die Formel (IV) allgemein definiert. In dieser Formel (IV) steht $R^1$ vorzugsweise für diejenigen Reste, die bereits im Zusammenhang mit der Beschreibung der erfindungsgemäßen Stoffe der Formel (I) als bevorzugt für diesen Substituenten genannt wurden.

M steht vorzugsweise für Wasserstoff oder für ein Natrium- oder Kaliumkation.

Die Oximinoacetamid-Derivate der Formel (IV) sind noch nicht bekannt. Man erhält sie in Analogie zu bekannten Verfahren (vgl. z.B. Ber. dtsch. chem. Ges. 42m 738 [1909] oder J. Pharm. Sci. 67, 860 [1978]), wenn man Cyanessigsäure oder aktivierte Derivate der Cyanessigsäure der Formel (XI),

$$NC - CH_2 - \overset{\overset{O}{\|}}{C} - X^1 \qquad (XI)$$

in welcher

$X^1$ für eine aktivierende Abgangsgruppe, wie beispielsweise Halogen, Methoxy, Ethoxy, Acetoxy oder Methansulfonyloxy, steht,

mit Aminen der Formel (III),

$$H_2N - R^1 \qquad (III)$$

in welcher

$R^1$ die oben angegebene Bedeutung hat,

gegebenenfalls in Gegenwart eines Verdünnungsmittels, wie beispielsweise Pyridin, Dimethylformamid oder Tetrahydrofuran und gegebenenfalls in Gegenwart eines Säurebindemittels, wie beispielsweise Triethylamin, bei Temperaturen zwischen -40 °C und +50 °C umsetzt. Man kann dabei aktivierte Derivate der Cyanessigsäure der Formel (XI), wie beispielsweise gemischte Anhydride mit Essigsäure oder Methansulfonsäure, auch in der Reaktionsmischung erst herstellen, indem man die Cyanessigsäure als solche

einsetzt und z.B. Essigsäureanhydrid oder Methansulfonylchlorid in Gegenwart einer Base wie beispielsweise Pyridin zusetzt. Die so erhältlichen 2-Cyanacetamide der Formel (XII),

$$NC-CH_2-\overset{O}{\overset{\|}{C}}-NH-R^1 \quad (XII)$$

in welcher

$R^1$ die oben angegebene Bedeutung hat,

werden in einer 2. Stufe mit einer Nitritverbindung der Formel (XIII),

$$R\text{-}O\text{-}N = O \quad (XIII)$$

in welcher

R für ein Alkalimetallkation, insbesondere ein Natriumkation oder für einen Alkylrest, insbesondere ein Ethyl-, t-Butyl oder Isoamylrest steht,

gegebenenfalls in Gegenwart eines Verdünnungsmittels, wie beispielsweise Wasser, Methanol, Ethanol oder Tetrahydrofuran, gegebenenfalls in Gegenwart einer Katalysatorsäure, wie biespielsweise Chlorwasserstoffsäure oder Essigsäure oder alternativ in Gegenwart einer Base, wie beispielsweise Natriumamid, Natriummethylat oder Natriumethylat, bei Temperaturen zwischen -20 °C und +120 °C umgesetzt.

Cyanessigsäure und ihre aktivierten Derivate der Formel (XI), Amine der Formel (III) und Natritverbindungen der Formel (XIII) sind allgemein bekannte Verbindungen der organischen Chemie.

Die zur Durchführung des erfindungsgemäßen Verfahrens (b) weiterhin als Ausgangsstoffe benötigten Alkylierungsmittel sind durch die Formel (V) allgemein definiert. In dieser Formel (V) steht $R^2$ vorzugsweise für diejenigen Reste, die bereits im Zusammenhang mit der Beschreibung der er findungsgemäßen Stoffe der Formel (I) als bevorzugt für diesen Substituenten genannt wurden.

$X^2$ steht vorzugsweise für Halogen, insbesondere für Chlor, Brom oder Iod, oder für jeweils gegebenenfalls substituiertes Alkylsulfonyloxy, Alkoxysulfonyloxy oder Arylsulfonyloxy, wie beispielsweise Methansulfonyloxy, Methoxysulfonyloxy, Ethoxysulfonyloxy oder p-Toluolsulfonyloxy.

Die Alkylierungsmittel der Formel (V) sind allgemein bekannte Verbindungen der organischen Chemie.

Die zur Durchführung des erfindungsgemäßen Verfahrens (c) als Ausgangsstoffe benötigten Oximinoacetamid-Derivate sind durch die Formel (VI) allgemein definiert. In dieser Formel (VI) steht $R^2$ vorzugsweise für diejenigen Reste, die bereits im Zusammenhang mit der Beschreibung der erfindungsgemäßen Stoffe der Formel (I) als bevorzugt für diesen Substituenten genannt wurden.

Die Oximinoacetamid-Derivate der Formel (VI) sind bekannt oder lassen sich in Analogie zu bekannten Verfahren herstellen (vergl. z.B. Chem. Ber. 54, 1342 [1921]; DE-OS 26 23 843 oder DE-OS 26 57 145).

Die zur Durchführung des erfindungsgemäßen Verfahrens (c) weiterhin als Ausgangsstoffe benötigten Alkylierungsmittel sind durch die Formel (VII) allgemein definiert. In dieser Formel (VII) steht $R^1$ vorzugsweise für diejenigen Reste, die bereits im Zusammenhang mit der Beschreibung der erfindungsgemäßen Stoffe der Formel (I) als bevorzugt für diesen Substituenten genannt wurden.

$X^3$ steht vorzugsweise für Halogen, insbesondere für Chlor, Brom oder Iod oder für jeweils gegebenenfalls substituiertes Alkylsulfonyloxy, Alkoxysulfonyloxy oder Arylsulfonyloxy, wie beispielsweise Methansulfonyloxy, Methoxysulfonyloxy, Ethoxysulfonyloxy oder p-Toluolsulfonyloxy.

Die Alkylierungsmittel der Formel (VII) sind allgemein bekannte Verbindungen der organischen Chemie.

Die zur Durchführung des erfindungsgemäßen Verfahrens (d) als Ausgangsstoffe benötigten Oximinoacetamid-Derivate sind durch die Formel (VIII) allgemein definiert. In dieser Formel (VIII) stehen, A, $R^2$ und $R^3$ vorzugsweise für diejenigen Reste, die bereits im Zusammenhang mit der Beschreibung der erfindungsgemäßen Stoffe der Formel (I) als bevorzugt für diese Substituenten genannt wurden.

Die Oximinoacetamid-Derivate der Formel (VIII) sind noch nicht bekannt. Sie sind jedoch Gegenstand einer eigenen deutschen Patentanmeldung P 36 30 732 vom 10.9.1986.

Man erhält sie beispielsweise, wenn man Cyanessigsäure oder aktivierte Derivate der Cyanessigsäure der Formel (XI),

$$NC-CH_2-\overset{O}{\overset{\|}{C}}-X^1 \quad (XI)$$

in welcher

$X^1$ für eine aktivierende Abgangsgruppe wie beispielsweise Halogen, Methoxy, Ethoxy, Acetoxy oder Methansulfonyloxy steht,
mit Aminoalkoholen der Formel (XIV),

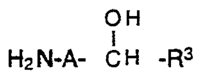 (XIV)

in welcher
$R^3$ und A die oben angegebene Bedeutung haben,
gegebenenfalls in Gegenwart eines Verdünnungsmittels wie beispielsweise Pyridin, Dimethylformamid oder Tetrahydrofuran und gegebenenfalls in Gegenwart eines Säurebindemittels wie beispielsweise Triethylamin bei Temperaturen zwischen -40 °C und +50 °C umsetzt. Man kann dabei aktivierte Derivate der Cyanessigsäure der Formel (XI), wie beispielsweise gemischte Anhydride mit Essigsäure oder Methansulfonsäure, auch in der Reaktionsmischung erst herstellen, indem man die Cyanessigsäure als solche einsetzt und z.B. Essigsäureanhydrid oder Methansulfonylchlorid in Gegenwart einer Base wie beispielsweise Pyridin zusetzt. Die so erhältlichen 2-Cyanacetamide der Formel (XV),

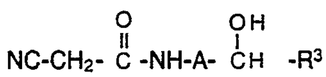 (XV)

in welcher
$R^3$ und A die oben angegebene Bedeutung haben,
werden in einer 2. Stufe mit einer Nitritverbindung der Formel (XIII),

R-O-N=O (XIII)
in welcher
R für ein Alkalimetallkation, insbesondere ein Natriumkation oder für einen Alkylrest, insbesondere ein Ethyl-, t-Butyl oder Isoamylrest steht,
gegebenenfalls in Gegenwart eines Verdünnungsmittels, wie beispielsweise Wasser, Methanol, Ethanol oder Tetrahydrofuran, gegebenenfalls in Gegenwart einer Katalysatorsäure, wie beispielsweise Chlorwasserstoffsäure oder Essigsäure, oder alternativ in Gegenwart einer Base, wie beispielsweise Natriumamid, Natriummethylat oder Natriumethylat, bei Temperaturen zwischen -20 °C und +120 °C umgesetzt und die so erhältlichen Oximinoacetamid-Derivate der Formel (XVI),

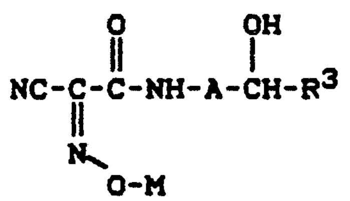 (XVI)

in welcher
A und $R^3$ die oben angegebene Bedeutung haben und
M für Wasserstoff oder für ein Alkalimetallkation steht,
werden in einer 3. Stufe in Analogie zur Durchführung des erfindungsgemäßen Verfahrens (b) alkyliert.

Die Aminoalkohole der Formel (XIV) sind allgemein bekannte Verbindungen der organischen Chemie oder erhältlich in Analogie zu bekannten Verfahren (vergl. z.B. Angew. Chemie 62, S. 547-586 [1950]).

Die zur Durchführung des erfindungsgemäßen Verfahrens (e) als Ausgangsstoffe benötigten Oximinoacetamidocarbonsäuren sind durch die Formel (IX) allgemein definiert. In dieser Formel (IX) stehen $R^2$ und A vorzugsweise für diejenigen Reste, die bereits im Zusammenhang mit der Beschreibung der erfindungsgemäßen Stoffe der Formel (I) als bevorzugt für diese Substituenten genannt wurden.

Die Oximinoacetamidocarbonsäuren der Formel (IX) sind bekannt oder erhältlich in Analogie zu bekannten Verfahren (vergl. z.B. EP 201 999 oder DE-OS 35 21 131).

Die zur Durchführung des erfindungsgemäßen Verfahrens (e) weiterhin als Ausgangsstoffe benötigten Carbonsäure-Derivate sind durch die Formel (X) allgemein definiert.

In dieser Formel (X) steht $R^3$ vorzugsweise für diejenigen Reste, die bereits im Zusammenhang mit der Beschreibung der erfindungsgemäßen Stoffe der Formel (I) als bevorzugt für diesen Substituenten genannt wurden.

$X^4$ steht vorzugsweise für Halogen insbesondere für Chlor oder Brom oder für einen Rest $-O-\underset{\underset{O}{\|}}{C}-R^3$,

wobei $R^3$ die oben angegebene Bedeutung hat.

Als Verdünnungsmittel zur Durchführung des erfindungsgemäßen Verfahrens (a) kommen inerte organische Lösungsmittel infrage. Hierzu gehören insbesondere aliphatische, alicyclische oder aromatische, gegebenenfalls halogenierte Kohlenwasserstoffe, wie beispielsweise Benzin, Benzol, Toluol, Xylol, Chlorbenzol, Petrolether, Hexan, Cyclohexan, Dichlormethan, Chloroform, Tetrachlorkohlenstoff; Ether, wie Diethylether, Dioxan, Tetrahydrofuran oder Ethylenglykoldimethyl- oder -diethylether; Ketone, wie Aceton oder Butanon; Nitrile, wie Acetonitril oder Propionitril; Amide, wie Dimethylformamid, Dimethylacetamid, M-Methylformanilid, N-Methylpyrrolidon oder Hexamethylphosphorsäuretriamid; Ester, wie Essigsäureethylester; Sulfoxide, wie Dimethylsulfoxid oder Alkohole, wie Methanol, Ethanol oder Isopropanol.

Das erfindungsgemäße Verfahren (a) kann gegebenenfalls in Gegenwart eines geeigneten Kondensationsmittels durchgeführt werden. Als solche kommen alle üblicher weise für derartige Amidierungsreaktionen verwendbaren Kondensationsmittel infrage. Beispielhaft genannt seien Säurehalogenidbildner wie Phosphortribromid, Phosphorpentachlorid, Phosphoroxychlorid oder Thionylchlorid, Anhydridbildner wie Chlorameisensäureethylester oder Methansulfonylchlorid, Carbodiimide, wie N,N′-Dicyclohexylcarbodiimid (DCC) oder andere übliche Kondensationsmittel wie N,N′-Carbonyldiimidazol, 2-Ethoxy-N-ethoxycarbonyl-1,2-dihydrochinolin (EEDQ) oder Triphenylphosphin/Tetrachlorkohlenstoff.

Das erfindungsgemäße Verfahren (a) wird vorzugsweise in Gegenwart eines geeigneten Reaktionshilfsmittels durchgeführt. Als solche kommen alle üblichen anorganischen oder organischen Basen in Frage. Hierzu gehören beispielsweise Alkalimetallalkoholate, wie Natriummethylat oder Natriumethylat, Alkalimetallhydroxide, wie Natriumhydroxid oder Kaliumhydroxid, Alkalimetallcarbonate, wie Natriumcarbonat, Kaliumcarbonat, Calciumcarbonat oder Natriumhydrogencarbonat, sowie tertiäre Amine, wie Triethylamin, N,N-Dimethylanilin, N-Methylmorpholin, Pyridin, N,N-Dimethylaminopyridin, Diazabicyclooctan (DABCO), Diazabicyclononen (DBN) oder Diazabicycloundecen (DBU).

Die Reaktionstemperaturen können bei der Durchführung des erfindungsgemäßen Verfahrens (a) in einem größeren Bereich variiert werden. Im allgemeinen arbeitet man bei Temperaturen zwischen 60 °C und 220 °C, vorzugsweise bei Temperaturen zwischen 0 °C und 150 °C.

Zur Durchführung des erfindungsgemäßen Verfahren (a) setzt man pro Mol an 2-Cyano-2-oximinoessigsäurederivat der Formel (II) im allgemeinen 1.0 bis 10.0 Mol, vorzugsweise 1.0 bis 2.0 Mol an Aminoverbindung der Formel (III) oder eines entsprechenden Säureadditionssalzes und gegebenenfalls 1.0 bis 3.0 Mol, vorzugsweise 1.0 bis 2.0 Mol an Kondensationsmittel bzw. Reaktionshilfsmittel ein. Die Reaktionsdurchführung, Aufarbeitung und Isolierung der Reaktionsprodukte erfolgt nach allgemein üblichen Methoden (vergl. z.B. Houben-Weyl "Methoden der organischen Chemie", Band XV/2, 4.Auflage, Thieme Verlag Stuttgart 1977).

Zur Durchführung des erfindungsgemäßen Verfahrens (b) kommen als Verdünnungsmittel ebenfalls inerte organische Lösungsmittel infrage. Hierzu gehören insbesondere aliphatische oder aromatische, gegebenenfalls halogenierte Kohlenwasserstoffe, wie beispielsweise Benzin, Benzol, Toluol, Xylol, Chlorbenzol, Petrolether, Hexan, Cyclohexan, Dichlormethan, Chloroform, Tetrachlorkohlenstoff; Ether, wie Diethylether, Dioxan, Tetrahydrofuran oder Ethylenglykoldimethyl- oder diethylether; Ketone, wie Aceton oder Butanon; Nitrile, wie Acetonitril oder Propionitril; Amide, wie Dimethylformamid, Dimethylacetamid, N-Methylformanilid, N-Methylpyrrolidon oder Hexamethylphosphorsäuretriamid oder Ester, wie Essigsäureethylester; Sulfoxide, wie Dimethylsulfoxid, oder Alkohole, wie Methanol, Ethanol oder Isopropanol.

Das erfindungsgemäße Verfahren (b) kann gegebenenfalls auch in einem Zweiphasensystem, wie beispielsweise Wasser/Toluol oder Wasser/Dichlormethan, gegebenenfalls in Gegenwart eines Phasentransferkatalysators, durchgeführt werden. Als Beispiele für solche Katalysatoren seien genannt : Tetrabutylammoniumiodid, Tetrabutylammoniumbromid, Tributyl-methylphosphoniumbromid, Trimethyl-$C_{13}/C_{15}$-alkylammoniumchlorid, Dibenzyldimethyl-ammoniummethylsulfat, Dimethyl-$C_{12}/C_{14}$-alkyl-benzylammoniumchlorid, Tetrabutylammoniumhydroxid, 15-Krone-5, 18-Krone-6, Triethylbenzylammoniumchlorid und Trimethylbenzylammoniumchlorid.

Als Reaktionshilfsmittel zur Durchführung des erfindungsgemäßen Verfahrens (b) kommen alle üblicherweise verwendbaren anorganischen oder organischen Basen infrage. Vorzugsweise verwendet man Alkalimetallhydride, -hydroxide, -alkoholate, -amide, -carbonate oder -hydrogencarbonate, wie beispielsweise Natriumhydrid, Natriumamid, Natriumhydroxid, Natriumethylat, Natriumcarbonat oder Natriumhydrogencarbonat oder auch tertiäre Amine, wie beispielsweise Triethylamin, N,N-Dimethylanilin, Pyridin, 4-(N,N-Dimethylamino-pyridin, Diazabicyclooctan, (DABCO), Diazabicyclononen (DBN) oder Diazabicycloundecen (DBU).

Die Reaktionstemperaturen können bei der Durchführung des erfindungsgemäßen Verfahrens (b) in einem größeren Bereich variiert werden. Im allgemeinen arbeitet man bei Temperaturen zwischen -20 °C und 100 °C, vorzugsweise bei Temperaturen zwischen 0 °C und 60 °C.

Zur Durchführung des erfindungsgemäßen Verfahrens (b) setzt man pro Mol an Oximinoacetamid-Derivat der Formel (IV) im allgemeinen 1,0 bis 5,0 Mol, vorzugsweise 1,0 bis 3,0 Mol an Alkylierungsmittel der Formel (V) und 1,0 bis 5,0 Mol, vorzugsweise 1,0 bis 3,0 Mol an Reaktionshilfsmittel sowie gegebenenfalls 0,001 bis 1,0 Mol an Phasentransferkatalysator ein.

In einer bevorzugten Durchführungsform ist es auch möglich, die als Ausgangsstoffe verwendeten Oximinoacetamid-Derivate der Formel (IV), wie bereits beschrieben, herzustellen und direkt aus dem Reaktionsgemisch heraus im "Eintopfverfahren" mit den Alkylierungsmitteln der Formel (V) weiter umzusetzen. Die Reaktionsdurchführung, Aufarbeitung und Isolierung der Reaktionsprodukte der Formel (I) erfolgt nach üblichen Methoden.

Als Verdünnungsmittel zur Durchführung des erfindungsgemäßen Verfahrens (c) kommen inerte organische Lösungsmittel infrage. Hierzu gehören insbesondere aliphatische, alicyclische oder aromatische, gegebenenfalls halogenierte Kohlenwasserstoffe, wie beispielsweise Benzin, Benzol, Toluol, Xylol, Chlorbenzol, Petrolether, Hexan, Cyclohexan, Dichlormethan, Chloroform, Tetrachlorkohlenstoff; Ether, wie Diethylether, Dioxan, Tetrahydrofuran oder Ethylenglykoldimethyl- oder -diethylether; Ketone, wie Aceton oder Butanon; Nitrile, wie Acetonitril oder Propionitril; Amide, wie Dimethylformamid, Dimethylacetamid, N-Methylformanilid, N-Methylpyrrolidon oder Hexamethylphosphorsäuretriamid; Ester, wie Essigsäureethylester, oder Sulfoxide, wie Dimethylsulfoxid.

Das erfindungsgemäße Verfahren (c) kann gegebenenfalls auch in einem Zweiphasensystem, wie beispielsweise Wasser/Toluol oder Wasser/Dichlormethan, gegebenenfalls in Gegenwart eines Phasentransferkatalysators, durchgeführt werden. Als Beispiele für solche Katalysatoren seien genannt: Tetrabutylammoniumiodid, Tetrabutylammoniumbromid, Tributyl-methylphosphoniumbromid, Trimethyl-$C_{13}$/$C_{15}$-alkylammoniumchlorid, Dibenzyl-dimethyl-ammoniummethylsulfat, Dimethyl-$C_{12}$/$C_{14}$-alkylbenzylammoniumchlorid, Tetrabutylammoniumhydroxid, 15-Krone-5, 18-Krone-6, Triethylbenzylammoniumchlorid und Trimethylbenzylammoniumchlorid.

Das erfindungsgemäße Verfahren (c) wird vorzugsweise in Gegenwart eines geeigneten Reaktionshilfsmittels durchgeführt. Als solche kommen alle üblichen anorganischen oder organischen Basen in Frage. Hierzu gehören beispielsweise Alkalimetallhydroxide, wie Natriumhydroxid oder Kaliumhydroxid; Alkalimetallcarbonate, wie Natriumcarbonat, Kaliumcarbonat oder Natriumhydrogencarbonat; sowie tertiäre Amine, wie Triethylamin, N,N-Dimethylanilin, Pyridin, N,N-Dimethylaminopyridin, Diazabicyclooctan (DABCO), Diazabicyclononen (DBN) oder Diazabicycloundecen (DBU).

Die Reaktionstemperaturen können bei der Durchführung des erfindungsgemäßen Verfahrens (c) in einem größeren Bereich variiert werden. Im allgemeinen arbeitet man bei Temperaturen zwischen 0 °C und 150 °C, vorzugsweise bei Temperaturen zwischen 20 °C und 120 °C.

Zur Durchführung des erfindungsgemäßen Verfahrens (c) setzt man pro Mol an Oximinoacetamid-Derivat der Formel (VI) im allgemeinen 1.0 bis 5.0 Mol, vorzugsweise 1.0 bis 2.0 Mol an Alkylierungsmittel der Formel (VII) und gegebenenfalls 1.0 bis 3.0 Mol, vorzugsweise 1.0 bis 2.0 Mol an Reaktionshilfsmittel ein. Die Reaktionsdurchführung, Aufarbeitung und Isolierung der Reaktionsprodukte erfolgt nach allgemein üblichen Methoden.

Als Oxidationsmitel zur Durchführung des erfindungsgemäßen Verfahrens (d) kommen alle üblicherweise für derartige Alkohol-Oxidationen gebräuchlichen Oxidationsmittel infrage. Vorzugsweise verwendet man Übergangsmetalloxide oder Salze, wie Chromtrioxid, Pyridinium-Chlorochromat, Mangandioxid oder Bleitetraacetat oder organische Oxidationsmittel, wie beispielsweise t-Butylhyprochlorit, N-Bromsuccinimid, Dimethylsulfoxid im Gemisch mit wasserbindenden Reagenzien, wie beispielsweise N,N′-Dicyclohexylcarbodiimid, Acetanhydrid, Oxalylchlorid oder ortho-Phosphorsäure, oder Periodinan (vergl. hierzu J.Org. Chem. **48**, 4155-4156 [1983]).

Das erfindungsgemäße Verfahren (d) wird gegebenenfalls in Gegenwart eines geeigneten Reaktionshilfsmittels durchgeführt. Als solche kommen in Abhängigkeit vom verwendeten Oxidationsmittel Säuren, wie beispielsweise Schwefelsäure oder Essigsäure oder Basen, wie Triethylamin, Pyridin, Diazabicyclooctan (DABCO), Diazabicyclononen (DBN) oder Diazabicycloundecen (DBU) infrage.

Als Verdünnungsmittel zur Durchführung des erfindungsgemäßen Verfahrens (d) kommen inerte organische Lösungs mittel gegebenenfalls auch in Mischung mit Wasser infrage. Hierzu gehören insbesondere aliphatische, alicyclische oder aromatische, gegebenenfalls halogenierte Kohlenwasserstoffe, wie beispielsweise Benzin, Benzol, Toluol, Xylol, Chlorbenzol, Petrolether, Hexan, Cyclohexan, Dichlormethan, Chloroform, Tetrachlorkohlenstoff; Ether, wie Diethylether, Dioxan, Tetrahydrofuran oder Ethylenglykoldimethyl- oder -diethylether; Ketone, wie Aceton oder Butanon; Nitrile, wie Acetonitril oder Propionitril; Amide, wie Dimethylformamid, Dimethylacetamid, N-Methylformanilid, N-Methylpyrrolidon oder Hexamethylphosphorsäuretriamid; Ester, wie Essigsäureethylester; Sulfoxide, wie Dimethylsulfoxid, oder Basen, wie Pyridin.

Die Reaktionstemperaturen können bei der Durchführung des erfindungsgemäßen Verfahrens (d) in Abhängigkeit vom verwendeten Oxidationsmittel in einem größeren Bereich variiert werden. Im allgemeinen arbeitet man bei Temperaturen zwischen -80 °C und 150 °C, vorzugsweise bei Temperaturen zwischen -60 °C und 100 °C.

Zur Durchführung des erfindungsgemäßen Verfahrens (d) setzt man pro Mol an Oximinoacetamid-Derivat der Formel (VIII) im allgemeinen 1.0 bis 10.0 Mol, vorzugsweise 1.0 bis 12 Mol an Oxidationsmittel und gegebenenfalls 1.0 bis 10.0 Mol, vorzugsweise 1.0 bis 2.0 Mol an Reaktionshilfsmittel ein. Die Reaktionsdurchführung, Aufarbeitung und Isolierung der Reaktionsprodukte erfolgt nach allgemein üblichen Methoden (vergl. hierzu auch J.org. Chem. 48, 4155-4156 [1983]; J.org. Chem. 43, 2480-2482 [1978] sowie C.Ferri "Reaktionen der organischen Synthese", Thieme Verlag Stuttgart 1978).

Als Verdünnungsmittel zur Durchführung des erfindungsgemäßen Verfahrens (e) kommen inerte organische Lösungsmittel infrage. Hierzu gehören insbesondere aliphatische, alicyclische oder aromatische, gegebenenfalls halogenierte Kohlenwasserstoffe, wie beispielsweise Benzin, Benzol, Toluol, Xylol, Chlorbenzol, Petrolether, Hexan, Cyclohexan, Dichlormethan, Chloroform, Tetrachlorkohlenstoff; Ether, wie Diethylether, Dioxan, Tetrahydrofuran oder Ethylenglykoldimethyl- oder -diethylether; Ketone, wie Aceton oder Butanon; Nitrile, wie Acetonitril oder Propionitril; Amide, wie dimethylformamid, Dimethylacetamid, N-Methylformanilid, N-Methylpyrrolidon oder Hexamethylphosphorsäuretriamid; Ester, wie Essigsäureethylester, oder tertiäre Basen, wie Pyridin,
Vorzugsweise wird das erfindungsgemäße Verfahren (e) jedoch ohne Zusatz eines Verdünnungsmittels durchgeführt.

Das erfindungsgemäße Verfahren (e) wird vorzugsweise in Gegenwart eines geeigneten Reaktionshilfsmittels durchgeführt. Als solche kommen alle üblichen anorganischen oder organischen Basen in Frage. Vorzugsweise verwendet man tertiäre Amine, wie Triethylamin, N,N-Dimethylanilin, Pyridin, N,N-Dimethylaminopyridin, Diazabicyclooctan (DABCO), Diazabicyclononen (DBN) oder Diazabicycloundecen (DBU).

Die Reaktionstemperaturen können bei der Durchführung des erfindungsgemäßen Verfahrens (e) in einem größeren Bereich variiert werden. Im allgemeinen arbeitet man bei Temperaturen zwischen -20 °C und 100 °C, vorzugsweise bei Temperaturen zwischen 0 °C und 60 °C.

Zur Durchführung des erfindungsgemäßen Verfahrens (e) setzt man pro Mol an Oximinoacetamidocarbonsäure der Formel (IX) im allgemeinen 1.0 bis 5.0 Mol, vorzugsweise 1.0 bis 2.0 Mol an Carbonsäurederivat der Formel (X) und gegebenenfalls 1.0 bis 5.0 Mol, vorzugsweise 1.0 bis 2.0 Mol an Reaktionshilfsmittel ein. Die Reaktionsdurchführung, Aufarbeitung und Isolierung der Reaktionsprodukte erfolgt nach allgemein üblichen Methoden (vergl. hierzu auch J.org. Chem. 50, 1112 [1985]; Liebigs Ann. Chem. 1978, 1916 oder Angew. Chem. 81, 1001 [1969]).

Die erfindungsgemäßen Wirkstoffe weisen eine stark mikrobizide Wirkung auf und können zur Bekämpfung von unerwünschten Schädlingen praktisch eingesetzt werden. Die Wirkstoffe sind für den Gebrauch als Pflanzenschutzmittel, vor allem als Fungizide einsetzbar.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Beispielhaft aber nicht begrenzend seien einige Erreger von pilzlichen Erkrankungen, die unter die oben aufgezählten Oberbegriffe fallen, genannt:
Pythium-Arten, wie beispielsweise Pythium ultimum;
Phytophthora-Arten, wie beispielsweise Phytophthora infestans;
Pseudoperonospora-Arten, wie beispielsweise Pseudoperonospora humuli oder Pseudoperonospora cubensis;
Plasmopara-Arten, wie beispielsweise Plasmopara viticola;
Peronospora-Arten, wie beispielsweise Peronospora pisi oder P. brassicae;
Erysiphe-Arten, wie beispielsweise Erysiphe graminis;
Sphaerotheca-Arten, wie beispielsweise Sphaerotheca fuliginea;
Podosphaera-Arten, wie beispielsweise Podosphaera leucotricha;
Venturia-Arten, wie beispielsweise Venturia inaequalis;
Pyrenophora-Arten, wie beispielsweise Pyrenophora teres oder P. graminea
(Konidienform: Drechslera, Syn: Helminthosporium);
Cochliobolus-Arten, wie beispielsweise Cochliobolus sativus
(Konidienform: Drechslera, Syn: Helminthosporium);

Uromyces-Arten, wie beispielsweise Uromyces appendiculatus;
Puccinia-Arten, wie beispielsweise Puccinia recondita;
Tilletia-Arten, wie beispielsweise Tilletia caries;
Ustilago-Arten, wie beispielsweise Ustilago nuda oder Ustilago avenae;
Pellicularia-Arten, wie beispielsweise Pellicularia sasakii;
Pyricularia-Arten, wie beispielsweise Pyricularia oryzae;
Fusarium-Arten, wie beispielsweise Fusarium culmorum;
Botrytis-Arten, wie beispielsweise Botrytis cinerea;
Septoria-Arten, wie beispielsweise Septoria nodorum;
Leptosphaeria-Arten, wie beispielsweise Leptosphaeria nodorum;
Cercospora-Arten, wie beispielsweise Cercospora canescens;
Alternaria-Arten, wie beispielsweise Alternaria brassicae;
Pseudocercosporella-Arten, wie beispielsweise Pseudocercosporella herpotrichoides.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut, und des Bodens.

Dabei lassen sich die erfindungsgemäßen Wirkstoffe mit besonders gutem Erfolg zur Bekämpfung von Oomyceten, wie beispielsweise gegen den Erreger der Tomatenbraunfäule (Phytophthora infestans) oder zur Bekämpfung von Reiskrankheiten, wie beispielsweise gegen den Erreger der Reisfleckenkrankheit (Pyricularia oryzae) einsetzen.

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Kalt-und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürlich und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in den Formulierungen in Mischung mit anderen bekannten Wirkstoffen vorliegen, wie Fungizide, Insektizide, Akarizide und Herbizide, sowie in Mischungen mit

Düngemitteln und Wachstumsregulatoren.

Die Wirkstoffe können als solche, in Form ihrer Formulierungen oder den daraus bereiteten Anwendungsformen, wie gebrauchsfertige Lösungen, emulgierbare Konzentrate, Emulsionen, Schäume, Suspensionen, Spritzpulver, Pasten, Lösliche Pulver, Stäubemittel und Granulate, angewendet werden. Die Anwendung geschieht in üblicher Weise, z.B. durch Gießen, Verspritzen, Versprühen, Verstreuen, Verstäuben, Verschäumen, Bestreichen usw. Es ist ferner möglich, die Wirkstoffe nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g, benötigt.

Bei Behandlung des Bodens sind Wirkstoffkonzentrationen von 0,00001 bis 0,1 Gew.-%, vorzugsweise von 0,0001 bis 0,02 %, am Wirkungsort erforderlich.

Herstellungsbeispiele:

Beispiel 1:

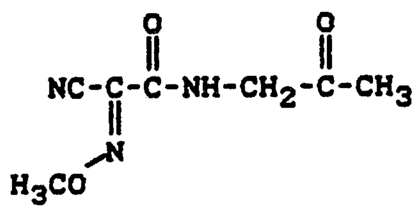

(Verfahren d)

Zu 5 g (0,0392 Mol) Oxalylchlorid in 87 ml Dichlormethan gibt man bei -60 °C 6,1 g (0,0784 Mol) Dimethylsulfoxid in 17,5 ml Dichlormethan so, daß die Temperatur der Mischung -50 °C nicht übersteigt. Man läßt eine Minute reagieren und gibt dann ebenfalls bei -60 °C tropfenweise unter Rühren 6,6 g (0,0356 Mol) (E)-1-(2-Cyano-2-methoximino-acetamido)-propan-2-ol in 35 ml Dichlormethan zu und rührt nach beendeter Zugabe weitere 15 Minuten bei -60 °C. Dann gibt man ebenfalls bei -60 °C tropfenweise unter Rühren 18 g (0,178 Mol) Triethylamin zu, rührt weitere 5 Minuten bei -60 °C und läßt dann die Mischung auf Raumtemperatur kommen. Zur Aufarbeitung wäscht man mit Wasser, engt im Vakuum ein, chromatographiert den Rückstand an Kieselgel (Dichlormethan/Aceton = 4:1) und kristallisiert das so erhältliche Produkt durch Verrühren mit Diethylether,

Man erhält 3 g (46 % der Theorie) an (E)-2-Cyano-2-methoximino-acetamido-aceton vom Schmelzpunkt 66-66,5 °C.

Herstellung der Ausgangsverbindung:

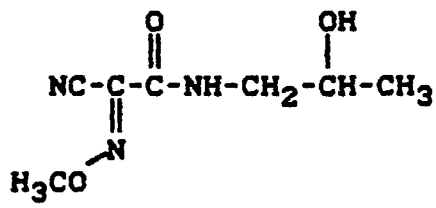

22,6 g (0,2 Mol) Cyanessigsäureethylester und 15 g (0,2 Mol) 1-Amino-2-propanol werden zusammengegeben, eine Stunde bei 25° C stehen gelassen, anschließend mit 23,4 g (0,2 Mol) Isoamylnitrit, dann mit 100 ml Ethanol und schließlich unter Kühlung tropfenweise mit einer Lösung von 4,6 g (0,2 Mol) Natrium in 100 ml Ethanol versetzt, wobei die Temperatur der Reaktionsmischung 20° C nicht übersteigen sollte. Nach beendeter Zugabe rührt man eine Stunde bei Raumtemperatur, engt im Vakuum ein, nimmt den Rückstand in 200 ml Aceton auf und gibt dann tropfenweise unter Rühren 25,2 g (0,2 Mol) Dimethylsulfat zu, so daß die Temperatur der Reaktionsmischung 25° C nicht übersteigt. Nach beendeter Zugabe rührt man eine weitere Stunde bei 25° C, filtriert, engt das Filtrat im Vakuum ein und destilliert den Rückstand im Hochvakuum.

Man erhält 17,8 g (48 % der Theorie) an (E)-1-(2-Cyano-2-methoximino-acetamido)-propan-2-ol vom Siedepunkt 125° C bei 0,7 mbar.

Beispiel 2:

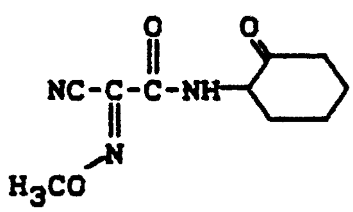

(Verfahren a)

Zu einer Suspension von 7,5 g (0,05 Mol) 2-Amino-cyclohexanon-Hydrochlorid in 50 ml trockenem Dichlormethan gibt man bei 0° C tropfenweise unter Rühren eine Lösung von(E)-2-Cyano-2-methoximinoacetylchlorid in 25 ml trockenem Dichlormethan und anschließend eine Lösung von 10,1 g (0,1 Mol) Triethylamin und 0,61 g (0,005 Mol) 4-Dimethylaminopyridin in 25 ml trockenem Dichlormethan und rührt nach beendeter Zugabe zunächst 1 Stunde bei 0° C und 18 Stunden bei Raumtemperatur.

Zur Aufarbeitung wäscht man mit jeweils 80 ml Wasser, 1-molarer Salzsäure, gesättigter Natriumhydrogencarbonatlösung und gesättigter Kochsalzlösung, trocknet über Natriumsulfat, entfernt das Lösungsmittel im Vakuum und kristallisiert den Rückstand aus Essigester/Petrolether um.

Man erhält 5,3 g (48 % der Theorie) an (E)-2-[2-Cyano-2-methoximinoacetamido]-cyclohexanon vom Schmelzpunkt 133-134° C.

Herstellung der Ausgangsverbindung:

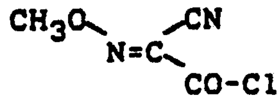

20 g (0,12 Mol) des Kaliumsalzes der (E)-2-Cyano-2-methoximinoessigsäure werden in 250 ml trockenem Ether suspendiert und nach Zugabe von einigen Tropfen Dimethylformamid bei 0 °C tropfenweise mit 76,2 g (0,6 Mol) Oxalylchlorid versetzt. Das Reaktionsgemisch wird 2 Stunden bei 0 °C gerührt, anschließend filtriert, das Filtrat im Vakuum bei Raumtemperatur eingedampft und der Rückstand durch zweimaliges Abdampfen mit Methylenchlorid vom restlichen Oxalylchlorid befreit.
Man erhält 13,5 g (77 % der Theorie) (E)-2-Cyan-2-methoximinoacetylchlorid als gelbes Öl, das sofort weiter umgesetzt wird.

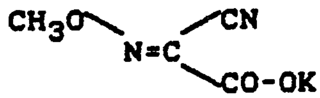

In eine Lösung von 124,8 g (0,672 Mol) 84prozentigem (E)- 2-Cyan-2-methoximino-essigsäureethylester in 500 ml Ethanol wird bei 20 °C eine Lösung von 45,1 g (0,806 Mol) Kaliumhydroxid in 500 ml Wasser getropft und das Reaktionsgemisch eine Stunde bei 40 °C gerührt. Die Lösung wird im Vakuum bei 40 °C eingedampft, der Rückstand mit Methanol 30 Minuten verrührt, abgesaugt, mit Ethanol, Acetonitril und Dichlormethan gewaschen und bei Raumtemperatur getrocknet.
Man erhält 58,6 g (53 % der Theorie) an (E)-2-Cyano-2-methoximino-essigsäure-Kaliumsalz.

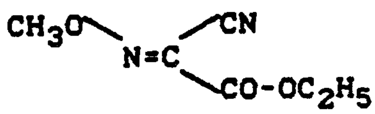

In eine Suspension von 164 g (1 Mol) (E)-2-Cyano-2-hydroxyiminoessigsäureethylester-Natriumsalz (Liebigs Ann. Chem., 1981, 1561) und 138 g pulverisiertem Kaliumcarbonat in 1,5 l Aceton werden 161 g (1,25 Mol) Dimethylsulfat (98 %ig) in 30 Minuten getropft und das Reaktionsgemisch 3 Stunden unter Rückfluß erhitzt. Nach Abkühlen wird über Kieselgur filtriert und eingedampft. Man erhält 124,8 g (68 % der Theorie) an (E)-2-Cyano-2-methoximino-essigsäureethylester als rotbraunes Öl von 85 % Reinheit (GC). Nach Chromatographie an der fünffachen Menge Kieselgel mit Chloroform erhält man ein 93prozentiges hellgelbes Öl.

In entsprechender Weise und gemäß den allgemeinen Angaben zur Herstellung erhält man die folgenden 2-Cyano-2-oximino-acetamide der allgemeinen Formel (I):

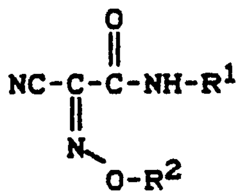 (I)

| Beisp. Nr. | $R^1$ | $R^2$ | physikalische Eigenschaften |
|---|---|---|---|
| 3 | 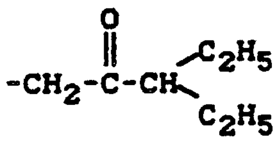 | $CH_3$ | $^1H$-NMR*): 0.9; 4.28 (E-Isomeres) |
| 4 | 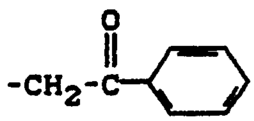 | $CH_3$ | Fp: 132-133° C (E-Isomeres) |

| Beisp. Nr. | $R^1$ | $R^2$ | physikalische Eigenschaften |
|---|---|---|---|
| 5 | 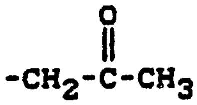 | $C_2H_5$ | $^1$H-NMR*): 2.27; 4.52 (E-Isomeres) |
| 6 | 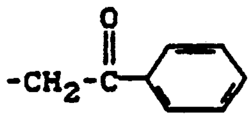 | $C_2H_5$ | Fp: 76-77° C (E-Isomeres) |
| 7 | 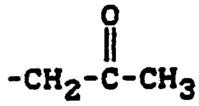 | $-(CH_2)_2-CH_3$ | $^1$H-NMR*): 2.25; 4.42 (E-Isomeres) |
| 8 | 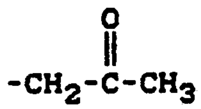 | 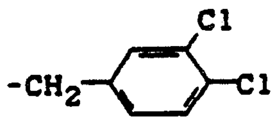 | Fp: 91-92° C (E-Isomeres) |
| 9 | 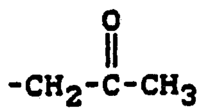 | 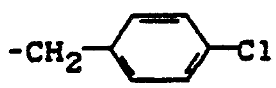 | Fp: 74-76° C (E-Isomeres) |
| 10 | 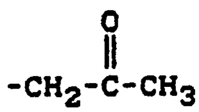 | $-CH_2-CH=CH_2$ | Fp: 50-51° C (E-Isomeres) |
| 11 | 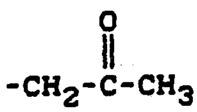 | 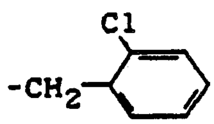 | Fp: 83-84° C (E-Isomeres) |
| 12 | 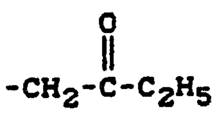 | $CH_3$ | Fp: 62-63° C (E-Isomeres) |
| 13 | 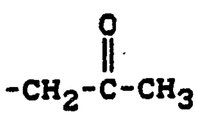 | $-CH_2-CN$ | Fp: 101-103° C (E-Isomeres) |

| Beisp. Nr. | $R^1$ | $R^2$ | physikalische Eigenschaften |
|---|---|---|---|
| 14 | 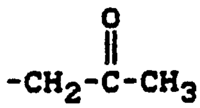 | 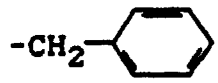 | Fp:82-83° C (E-Isomeres) |
| 15 | 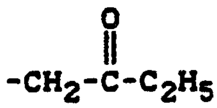 | $-C_2H_5$ | $^1H$-NMR*): 2.53; 4.53 (E-Isomeres) |
| 16 | 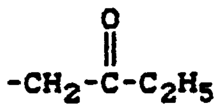 | $-(CH_2)_2-CH_3$ | $^1H$-NMR*): 2.52; 4.42 (E-Isomeres) |
| 17 | 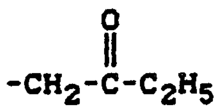 | 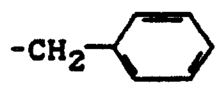 | Fp:56-58° C (E-Isomeres) |
| 18 | 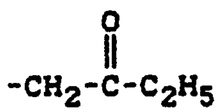 | 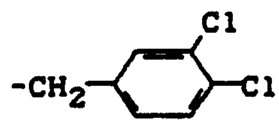 | Fp:88-90° C (E-Isomeres) |
| 19 | 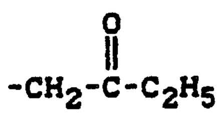 | $-CH_2-CN$ | $^1H$-NMR*): 2.54; 5.12 (E-Isomeres) |
| 20 | 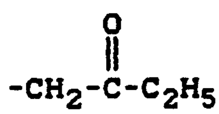 | $-CH_2-CH=CH_2$ | $^1H$-NMR*): 2.52; 4.92 (E-Isomeres) |
| 21 | 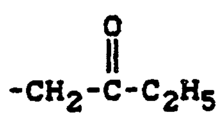 | 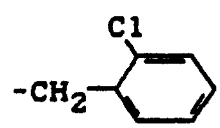 | $^1H$-NMR*): 2.51; 5.58 (E-Isomeres) |
| 22 | 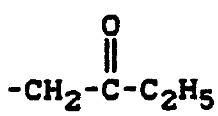 | 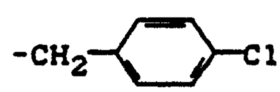 | $^1H$-NMR*): 2.51; 5.41 (E-Isomeres) |
| 23 | 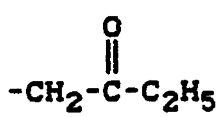 | 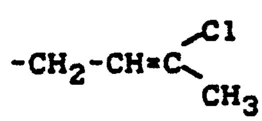 | $^1H$-NMR*): 2.53; 4.25 (E-Isomeres) |

| Beisp. Nr. | $R^1$ | $R^2$ | physikalische Eigenschaften |
|---|---|---|---|
| 24 | 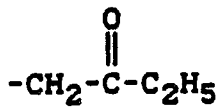 | $-(CH_2)_2-CH=CH_2$ | $^1H$-NMR*): 4.26; 4.52 (E-Isomeres) |
| 25 | 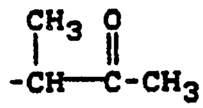 | $-CH_3$ | $^1H$-NMR*): 2.4; 4.41 (E-Isomeres) |
| 26 | 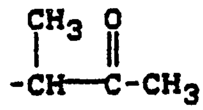 | $-C_2H_5$ | $^1H$-NMR*): 2.28; 4.53 (E-Isomeres) |
| 27 | 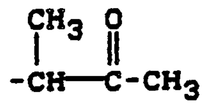 | 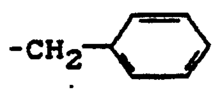 | $^1H$-NMR*): 2.28; 5.47 (E-Isomeres) |
| 28 | 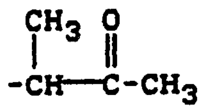 | $-(CH_2)_2-CH_3$ | $^1H$-NMR*): 2.29; 4.45 (E-Isomeres) |
| 29 | 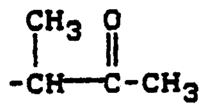 | $-CH_2-CH=CH_2$ | $^1H$-NMR*): 2.28; 4.95 (E-Isomeres) |
| 30 | 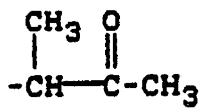 | $-CH_2-CN$ | $^1H$-NMR*): 2.29; 5.13 (E-Isomeres) |
| 31 | 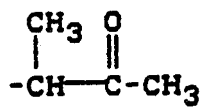 | 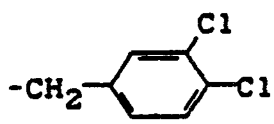 | $^1H$-NMR*): 2.28; 5.48 (E-Isomeres) |
| 32 | 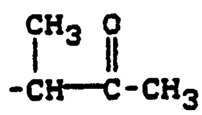 | 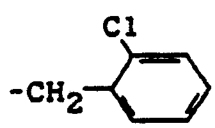 | $^1H$-NMR*): 2.28; 5.58 (E-Isomeres) |
| 33 | 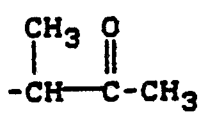 | 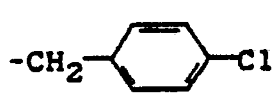 | $^1H$-NMR*): 2.28; 5.4 (E-Isomeres) |

| Beisp. Nr. | $R^1$ | $R^2$ | physikalische Eigenschaften |
|---|---|---|---|
| 34 | 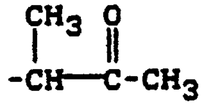 | $-(CH_2)_2-CH=CH_2$ | $^1$H-NMR*): 2.28; 4.54 (E-Isomeres) |
| 35 | 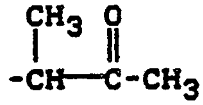 | $-CH_2-CH=CH-CH_3$ | $^1$H-NMR*): 2.28; 1.78 (E-Isomeres) |
| 36 | 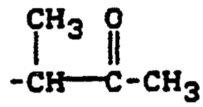 | 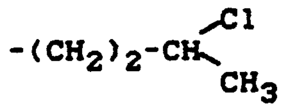 | $^1$H-NMR*): 4.65; 5.0 (E-Isomeres) |
| 37 | 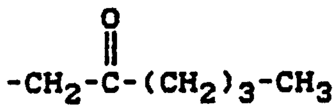 | $CH_3$ | $^1$H-NMR*): 4.22; 4.28 (E-Isomeres) |
| 38 | 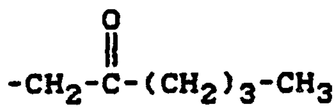 | $-CH_2-CN$ | $^1$H-NMR*): 4.22; 5.08 (E-Isomeres) |
| 39 | 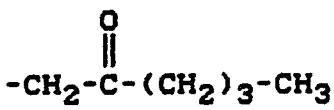 | $-CH_2-CH=CH_2$ | $^1$H-NMR*): 4.22; 4.93 (E-Isomeres) |
| 40 | 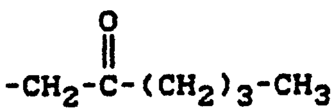 | 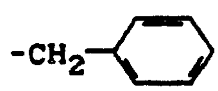 | $^1$H-NMR*): 4.21; 5.42 (E-Isomeres) |
| 41 | 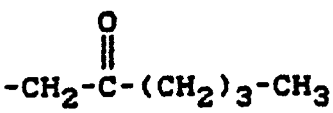 | $-(CH_2)_2-CH_3$ | $^1$H-NMR*): 4.22; 4.42 (E-Isomeres) |
| 42 | 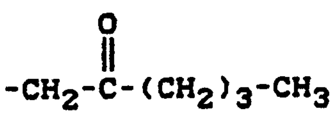 | 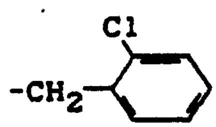 | $^1$H-NMR*): 4.21; 5.53 (E-Isomeres) |

| Beisp. Nr. | $R^1$ | $R^2$ | physikalische Eigenschaften |
|---|---|---|---|
| 43 | 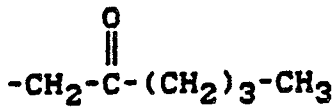 | 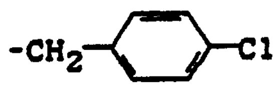 | ¹H-NMR*): 4,22; 5,4 (E-Isomeres) |
| 44 | 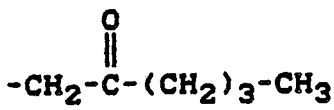 | $-(CH_2)_2-CH=CH_2$ | ¹H-NMR*): 4,22; 4,52 (E-Isomeres) |
| 45 | 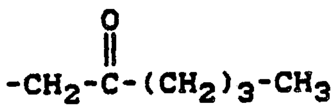 | $-CH_2-CH=CH-CH_3$ | ¹H-NMR*): 4,22; 4,84 (E-Isomeres) |
| 46 | 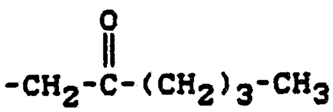 | $-C_2H_5$ | ¹H-NMR*): 4,25; 4,52 (E-Isomeres) |
| 47 | 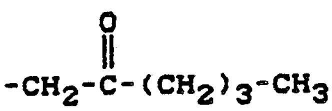 | 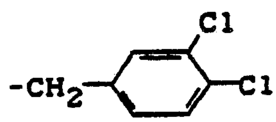 | ¹H-NMR*): 4,22; 5,37 (E-Isomeres) |
| 48 | 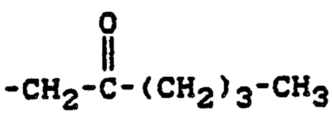 | 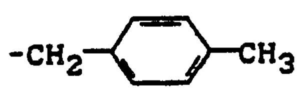 | ¹H-NMR*): 4,22; 5,40 (E-Isomeres) |
| 49 | 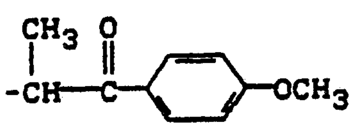 | $-CH_3$ | Fp: 103-104° C (E-Isomeres) |

| Beisp. Nr. | $R^1$ | $R^2$ | physikalische Eigenschaften |
|---|---|---|---|
| 50 | 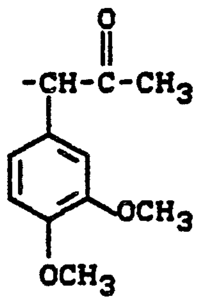 | $-CH_3$ | $^1H$-NMR*): 2.15; 4.29 (E-Isomeres) |
| 50 | 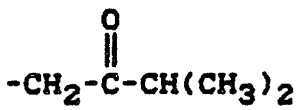 | $-CH_3$ | $^1H$-NMR*): 1.20; 2.72; 4.29; 4.31; 7.32 (E-Isomeres) |

*) Die $^1H$-NMR-Spektren wurden in Deuterochloroform ($CDCl_3$) oder Hexadeuterodimethylsulfoxid (DMSO-$d_6$) mit Tetramethylsilan (TMS) als innerem Standard aufgenommen. Angegeben ist die chemische Verschiebung als δ-Wert in ppm.

Anwendungsbeispiel:

In dem folgenden Anwendungsbeispiel wurde die nachstehend aufgeführte Verbindung als Vergleichssubstanz eingesetzt:

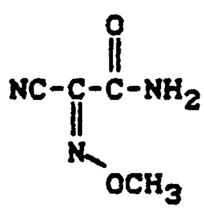

(A)

2-Cyano-2-methoximinoacetamid
(bekannt aus DE-OS 23 12 956)

Beispiel A

Phytophthora-Test (Tomate)/protektiv

Lösungsmittel: 4,7 Gewichtsteile Aceton

Emulgator: 0,3 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Pflanzen mit der Wirkstoffzubereitung bis zur Tropfnässe. Nach Antrocknen des Spritzbelages werden die Pflanzen mit einer wäßrigen Sporensuspension von Phytophthora infestans inokuliert.

Die Pflanzen werden in einer Inkubationskabine mit 100% relativer Luftfeuchtigkeit und ca. 20 °C aufgestellt.

3 Tage nach der Inokulation erfolgt die Auswertung.

Eine deutliche Überlegenheit in der Wirksamkeit gegenüber dem Stand der Technik zeigen in diesem Test z.B. die Verbindungen gemäß den Herstellungsbeispielen: 1, 3, 12, 13, 15, 16, 17, 18 und 23.

## Ansprüche

1. 2-Cyano-2-oximino-acetamide der allgemeinen Formel

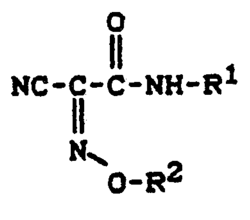

(I)

in welcher

$R^1$ für einen Rest

$-A-\overset{O}{\overset{\|}{C}}-R^3$ oder für einen gegebenenfalls substituierten Rest

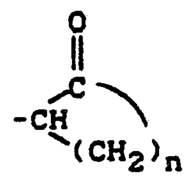

steht,

$R^2$ für Alkyl, Alkenyl, Alkinyl, Halogenalkyl, Halogenalkenyl, Cyanalkyl, Alkoxyalkyl, Alkanoylalkyl, Alkoxycarbonylalkyl, Alkylcarbonyloxyalkyl oder für jeweils gegebenenfalls substituiertes Aralkyl, Cycloalkylalkyl, Heterocyclylalkyl oder Cycloalkyl steht, wobei

A für einen gegebenenfalls substituierten Alkylenrest steht,

n für eine Zahl 2, 3, 4 oder 5 steht und

$R^3$ für Wasserstoff, Alkyl, Alkenyl, Alkinyl, Halogenalkyl, Halogenalkenyl, Cyanalkyl, Alkoxyalkyl, Alkylthioalkyl, Alkanoylalkyl, Hydroxycarbonylalkyl, Alkoxycarbonylalkyl, Alkylcarbonyloxyalkyl, Alkanoylaminoalkyl, Alkoxycarbonylaminoalkyl oder für gegebenenfalls substituiertes Carbamoylalkyl steht;

$R^3$ außerdem für jeweils gegebenenfalls substituiertes Aralkyl, Cycloalkylalkyl oder Heterocyclylalkyl steht und schließlich für jeweils gegebenenfalls substituiertes Aryl, Cycloalkyl, Cycloalkenyl oder Heterocyclyl steht,

deren geometrischen und optischen Isomeren und Isomerengemische.

2. 2-Cyano-2-oximino-acetamide gemäß Anspruch 1, wobei in der Formel (I)
$R^1$ für einen Rest
$-A-\overset{O}{\overset{\|}{C}}-R^3$ oder für einen gegebenenfalls ein- bis mehrfach, gleich oder verschieden substituierten Rest

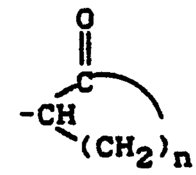

steht,
wobei als Substituenten infrage kommen: geradkettiges oder verzweigtes Alkyl mit 1 bis 4 Kohlenstoffatomen und
$R^2$ für geradkettiges oder verzweigtes Alkyl mit 1 bis 12 Kohlenstoffatomen, für jeweils geradkettiges oder verzweigtes Alkenyl oder Alkinyl mit jeweils 3 bis 8 Kohlenstoffatomen, für geradkettiges oder verzweigtes Halogenalkyl mit 1 bis 8 Kohlenstoffatomen und 1 bis 9 gleichen oder verschiedenen Halogenatomen, für geradkettiges oder verzweigtes Halogenalkenyl mit 3 bis 8 Kohlenstoffatomen und 1 bis 9 gleichen oder verschiedenen Halogenatomen, für jeweils geradkettiges oder verzweigtes Cyanalkyl, Alkoxyalkyl, Alkanoylalkyl, Alkoxycarbonylalkyl oder Alkylcarbonyloxyalkyl mit jeweils 1 bis 6 Kohlenstoffatomen in den einzelnen Alkylteilen oder für gegebenenfalls einfach bis mehrfach, gleich oder verschieden substituiertes Aralkyl mit 6 bis 10 Kohlenstoffatomen im Arylteil und 1 bis 4 Kohlenstoffatomen im geradkettigen oder verzweigten Alkylteil steht, wobei als Substituenten infrage kommen: Halogen, Cyano, Nitro, jeweils geradkettiges oder verzweigtes Alkyl, Alkoxy oder Alkylthio mit jeweils 1 bis 4 Kohlenstoffatomen oder jeweils geradkettiges oder verzweigtes Halogenalkyl, Halogenalkoxy oder Halogenalkylthio mit jeweils 1 bis 4 Kohlenstoffatomen und 1 bis 9 gleichen oder verschiedenen Halogenatomen;
$R^2$ außerdem für gegebenenfalls einfach bis mehrfach, gleich oder verschieden substituiertes Heterocyclylalkyl mit 1 bis 4 Kohlenstoffatomen im geradkettigen oder verzweigten Alkylteil und 2 bis 9 Kohlenstoffatomen und 1 bis 4 Heteroatomen, insbesondere Stickstoff, Sauerstoff und/oder Schwefel, im Heterocyclylteil steht, wobei als Substituenten infrage kommen: Halogen, jeweils geradkettiges oder verzweigtes Alkyl oder Alkoxy mit jeweils 1 bis 4 Kohlenstoffatomen oder jeweils geradkettiges oder verzweigtes Halogenalkyl oder Halogenalkoxy mit jeweils 1 bis 4 Kohlenstoffatomen und 1 bis 9 gleichen oder verschiedenen Halogenatomen und für jeweils einfach bis mehrfach, gleich oder verschieden durch Alkyl mit 1 bis 4 Kohlenstoffatomen substituiertes Cycloalkylalkyl mit 1 bis 4 Kohlenstoffatomen im Alkylteil und 3 bis 7 Kohlenstoffatomen im Cycloalkylteil oder Cycloalkyl mit 3 bis 7 Kohlenstoffatomen steht, wobei
A für einen geradkettigen oder verzweigten, gegebenenfalls durch gegebenenfalls einfach bis mehrfach, gleich oder verschieden substituiertes Phenyl substituierten Alkylenrest mit 1 bis 6 Kohlenstoffatomen steht, wobei als Phenylsubstituenten gegebenenfalls infrage kommen: Halogen, Cyano, Nitro, jeweils geradkettiges oder verzweigtes Alkyl, Alkoxy oder Alkylthio mit jeweils 1 bis 4 Kohlenstoffatomen oder jeweils geradkettiges oder verzweigtes Halogenalkyl, Halogenalkoxy oder Halogenalkylthio mit jeweils 1 bis 4 Kohlenstoffatomen und gegebenenfalls 1 bis 9 gleichen oder verschiedenen Halogenatomen,
n für eine Zahl 2, 3, 4 oder 5 steht und
$R^3$ für Wasserstoff, für geradkettiges oder verzweigtes Alkyl mit 1 bis 12 Kohlenstoffatomen, für jeweils geradkettiges oder verzweigtes Alkenyl oder Alkinyl mit jeweils 3 bis 8 Kohlenstoffatomen, für geradkettiges oder verzweigtes Halogenalkyl mit 1 bis 8 Kohlenstoffatomen und 1 bis 9 gleichen oder verschiedenen Halogenatomen, für geradkettiges oder verzweigtes Halogenalkenyl mit 3 bis 8 Kohlenstoffatomen und 1 bis 9 gleichen oder verschiedenen Halogenatomen, für jeweils geradkettiges oder verzweigtes Cyanalkyl, Alkoxyalkyl, Alkylthioalkyl, Alkanoylalkyl, Hydroxycarbonylalkyl, Alkoxycarbonylalkyl, Alkylcarbonyloxyalkyl, Alkanoylaminoalkyl oder Alkoxycarbonylaminoalkyl mit jeweils 1 bis 6 Kohlenstoffatomen in den einzelnen Alkylteilen, für gegebenenfalls einfach oder zweifach am Stickstoff durch geradkettiges oder verzweigtes Alkyl mit 1 bis 4 Kohlenstoffatomen, durch geradkettiges oder verzweigtes, zweifach verknüpftes Alkylen mit 4 bis 9 Kohlenstoffatomen oder durch geradkettiges oder verzweigtes, zweifach verknüpftes Heteroalkylen mit 4 bis 8 Kohlenstoffatomen und Sauerstoff, Schwefel oder einer NH-Gruppe als Heteroatom substituiertes Carbamoylalkyl mit 1 bis 4 Kohlenstoffatomen im geradkettigen oder verzweigten Alkylteil steht oder für gegebenenfalls einfach bis mehrfach, gleich oder verschieden substituiertes Aralkyl mit 6 bis 10 Kohlenstoffatomen im Arylteil und 1 bis 4 Kohlenstoffatomen im geradkettigen oder verzweigten Alkylteil steht,

wobei als Substituenten infrage kommen: Halogen, Cyano, Nitro, jeweils geradkettiges oder verzweigtes Alkyl, Alkoxy oder Alkylthio mit jeweils 1 bis 4 Kohlenstoffatomen, jeweils geradkettiges oder verzweigtes Halogenalkyl, Halogenalkoxy oder Halogenalkylthio mit jeweils 1 bis 4 Kohlenstoffatomen und 1 bis 9 gleichen oder verschiedenen Halogenatomen;
$R^3$ außerdem für gegebenenfalls einfach bis mehrfach, gleich oder verschieden substituiertes Heterocyclylalkyl mit 1 bis 4 Kohlenstoffatomen im geradkettigen oder verzweigten Alkylteil und 2 bis 9 Kohlenstoffatomen und 1 bis 4 Heteroatomen im Heterocyclylteil steht, wobei als Substituenten infrage kommen: Halogen, jeweils geradkettiges oder verzweigtes Alkyl oder Alkoxy mit jeweils 1 bis 4 Kohlenstoffatomen, jeweils geradkettiges oder verzweigtes Halogenalkyl oder Halogenalkoxy mit jeweils 1 bis 4 Kohlenstoffatomen und 1 bis 9 gleichen oder verschiedenen Halogenatomen; $R^3$ außerdem für einfach bis mehrfach, gleich oder verschieden durch Alkyl mit 1 bis 4 Kohlenstoffatomen substituiertes Cycloalkylalkyl mit 1 bis 4 Kohlenstoffatomen im Alkylteil und 3 bis 7 Kohlenstoffatomen im Cycloalkylteil steht;
$R^3$ außerdem für jeweils gegebenenfalls einfach bis mehrfach, gleich oder verschieden durch geradkettiges oder verzweigtes Alkyl mit 1 bis 4 Kohlenstoffatomen substituiertes, gegebenenfalls verbrücktes oder gegebenenfalls mit ein oder zwei Carbo- und/oder Heterocyclen anelliertes Cycloalkyl oder Cycloalkenyl mit jeweils 3 bis 10 Kohlenstoffatomen steht;
$R^3$ außerdem für gegebenenfalls einfach bis mehrfach, gleich oder verschieden substituiertes, gegebenenfalls mit ein oder zwei Carbo-und/oder Heterocyclen anelliertes Aryl mit 6 bis 10 Kohlenstoffatomen steht, wobei als Substituenten infrage kommen: Halogen, Cyano, Nitro, jeweils geradkettiges oder verzweigtes Alkyl, Alkoxy, Alkylthio oder Alkanoylamino mit jeweils 1 bis 4 Kohlenstoffatomen, jeweils geradkettiges oder verzweigtes Halogenalkyl, Halogenalkoxy oder Halogenalkylthio mit jeweils 1 bis 4 Kohlenstoffatomen und gegebenenfalls 1 bis 9 gleichen oder verschiedenen Halogenatomen und schließlich $R^3$ für gegebenenfalls einfach bis mehrfach, gleich oder verschieden substituiertes, gegebenenfalls mit ein oder zwei Carbo- und/oder Heterocyclen anelliertes Heterocyclyl mit 2 bis 6 Kohlenstoffatomen und 1 bis 4 Heteroatomen steht, wobei als Substituenten infrage kommen: Halogen, jeweils geradkettiges oder verzweigtes Alkyl, Alkoxy, Alkylthio oder Alkanoylamino mit jeweils 1 bis 4 Kohlenstoffatomen oder Phenyl,
deren geometrischen und optischen Isomere und Isomerengemische.

3. 2-Cyano-2-oximino-acetamide gemäß Anspruch 1, wobei in der Formel (I)
$R^1$ für einen Rest
$-A-\overset{\overset{O}{\|}}{C}-R^3$ oder für einen gegebenenfalls ein- bis dreifach durch Methyl substituierten Rest

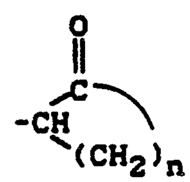

steht,
$R^2$ für Methyl, Ethyl, n- oder i-Propyl, n-, i-, s-oder t-butyl, für jeweils geradkettiges oder verzweigtes Pentyl, Hexyl, Heptyl oder Octyl, für Vinyl, Allyl, für jeweils geradkettiges oder verzweigtes 1-Butenyl oder 2-Butenyl, für Ethinyl, Propargyl, für jeweils geradkettiges oder verzweigtes 1-Butinyl oder 2-Butinyl, für Chlorallyl, Bromallyl, Chlorbutenyl, Cyanmethyl, Cyanethyl, Methoxymethyl, Ethoxymethyl, Methoxyethyl, Ethoxyethyl, für Methoxycarbonylmethyl, Ethoxycarbonylmethyl, Methoxycarbonylethyl, Ethoxycarbonylethyl, für Acetylmethyl, für Propionylmethyl, für Acetylethyl, für Propionylethyl, für Acetoxymethyl, Acetoxyethyl, Propionyloxymethyl, Propionyloxyethyl oder für jeweils gegebenenfalls ein- bis dreifach, gleich oder verschieden substituiertes Benzyl oder Phenylethyl steht, wobei als Substituenten der Phenylringe infrage kommen: Fluor, Chlor, Brom, Methyl, Ethyl, n-oder i-Propyl, n-, i-, s- oder t-Butyl, Methoxy, Ethoxy, Methylthio, Trifluormethyl, Trifluormethoxy oder Trifluormethylthio und
$R^2$ außerdem für jeweils gegebenenfalls ein-bis dreifach durch Methyl substituiertes Cyclopropyl, Cyclopropylmethyl, Cyclopentyl, Cyclohexyl oder Cyclohexylmethyl steht,
A für einen gegebenenfalls substituierten Rest der Formel $-CH_2-$, $-CH_2-CH_2-$, $-CH(CH_3)-$, $-CH_2-CH_2-CH_2-$ oder $-CH(CH_3)-CH_2-$ steht, wobei als Substituenten gegebenenfalls ein- bis dreifach durch Fluor, Chlor, Brom, Methyl, Methoxy, Methylthio und/oder Trifluormethyl substituierte Phenylreste infrage kommen,
n für eine Zahl 3 oder 4 steht und
$R^3$ für Wasserstoff, für Methyl, Ethyl, n-oder i-Propyl, n-, i-, s- oder t-Butyl, für jeweils geradkettiges oder

verzweigtes Pentyl, Hexyl, Heptyl oder Octyl, für Vinyl, Allyl, für 1-Propenyl oder 2-Propenyl, für jeweils geradkettiges oder verzweigtes 1-Butenyl oder 2-Butenyl, für Propargyl, für jeweils geradkettiges oder verzweigtes 1-Butinyl oder 2-Butinyl, für Trifluormethyl, Trichlormethyl, Dichlorfluormethyl, Difluorchlormethyl, Chlormethyl, Dichlormethyl, Chlorethyl, Bromethyl, Trichlorethyl, Pentachlorethyl, Trifluorethyl, Pentafluorethyl oder Heptafluorpropyl, für Chlorallyl, Bromallyl, Chlorbutenyl, Cyanmethyl, Cyanethyl, Methoxymethyl, Ethoxymethyl, Methoxyethyl, Ethoxyethyl, Methylthiomethyl, Methylthioethyl, für Hydroxycarbonylmethyl, Hydroxycarbonylethyl, Methoxycarbonylmethyl, Ethoxycarbonylmethyl, Methoxycarbonylethyl, Ethoxycarbonylethyl, für Acetylmethyl, für Propionylmethyl, für Acetylethyl, für Propionylethyl, für Acetoxymethyl, Acetoxyethyl, Propionyloxymethyl, Propionyloxyethyl, für Acetamidomethyl, Acetamidoethyl, Propionamidomethyl, Propionamidoethyl, für Methoxycarbonylaminomethyl, Ethoxycarbonylaminomethyl, Butoxycarbonylaminomethyl, Methoxycarbonylaminoethyl, Ethoxycarbonylaminoethyl, für jeweils gegebenenfalls einfach oder zweifach am Stickstoff durch Methyl, Ethyl, n- oder i-Propyl oder n-, i-, s-oder t-Butyl substituiertes Carbamoylmethyl oder Carbamoylethyl, für gegebenenfalls ein- bis vierfach durch Methyl substituiertes 1-Pyrrolidinylcarbonylmethyl, 1-Piperidinylcarbonylmethyl oder 4-Morpholinylcarbonylmethyl steht;

$R^3$ außerdem für gegebenenfalls ein- bis dreifach, gleich oder verschieden substituiertes Benzyl oder Phenylethyl steht, wobei als Substituenten infrage kommen: Fluor, Chlor, Brom, Methyl, Ethyl, n- oder i-Propyl, n-, i-, s- oder t-Butyl, Methoxy, Ethoxy, Methylthio, Trifluormethyl, Trifluormethoxy oder Trifluormethylthio,

$R^3$ außerdem für jeweils gegebenenfalls ein- bis dreifach durch Methyl substituiertes und/oder durch jeweils zweifach verknüpftes Methylen, Ethylen, Propylen oder Butylen überbrücktes und/oder benzanelliertes Cyclopropyl, Cyclopropylmethyl, Cyclopentyl, Cyclohexyl, Cyclohexenyl oder Cyclohexylmethyl steht;

$R^3$ weiterhin für jeweils gegebenenfalls ein- bis dreifach, gleich oder verschieden substituiertes Phenyl oder Naphthyl steht, wobei als Substituenten jeweils infrage kommen: Fluor, Chlor, Brom, Cyano, Nitro, Methyl, Ethyl, n-oder i-Propyl, n-, i-, s- oder t-Butyl, Methoxy, Ethoxy, n- oder i-Propoxy, Methylthio, Acetamido, Propionamido, Trifluormethyl, Trifluormethoxy oder Trifluormethylthio oder

$R^3$ schließlich für einen jeweils gegebenenfalls ein-bis dreifach, gleich oder verschieden substituierten Heterocyclylmethyl-, Heterocyclylethyl- oder Heterocyclylrest steht, wobei als Heterocyclen jeweils infrage kommen:

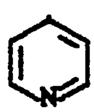 ; 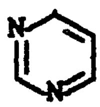 ; 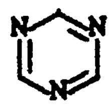 ; 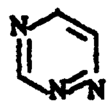 ; 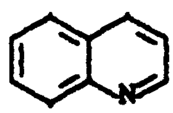 ;

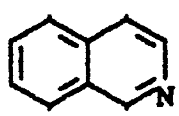 ; 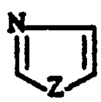 ; 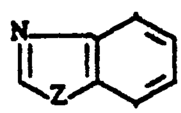 ; 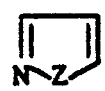 ;

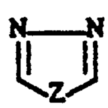 ; 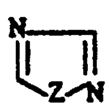 ; 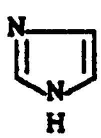 ; 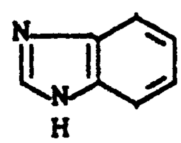 ;

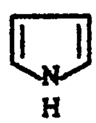 ; 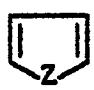 ; 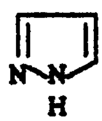 ; 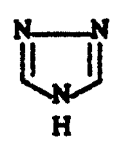 ; 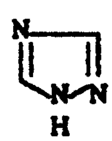 ;

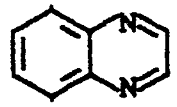 ; 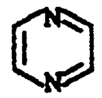 ; 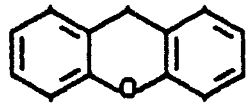 ; 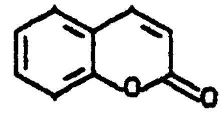

oder

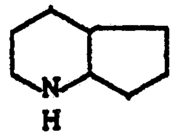,

wobei Z jeweils für Sauerstoff oder Schwefel steht und wobei als Substituenten jeweils infrage kommen: Fluor, Chlor, Brom, Methyl, Methoxy, Methylthio, Phenyl und Acetamido, deren geometrischen und optischen Isomere und Isomerengemische.

4. 2-Cyano-2-oximino-acetamide gemäß Anspruch 1, wobei in der Formel (I)
$R^1$ für einen Rest
$-A-\overset{\overset{O}{\|}}{C}-R^3$ oder für einen Rest

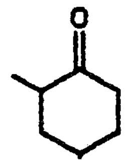 oder 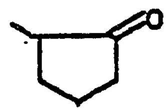

steht,
$R^2$ für Methyl, Ethyl, n- oder i-Propyl, n-, i-, s-oder t-Butyl, Allyl, n- oder i-Butenyl, Chlorbutenyl, Propargyl, n- oder i-Butinyl, Cyanmethyl, Cyanethyl, Methylcarbonylmethyl, Methoxycarbonylmethyl, Ethoxycarbonylmethyl, Methylcarbonyloxyethyl, Ethylcarbonyloxyethyl oder für gegebenenfalls ein- bis dreifach, gleich oder verschieden substituiertes Benzyl steht, wobei als Substituenten genannt seien: Chlor, Methyl, Methoxy, Methylthio oder Trifluormethyl,
A für einen Rest der Formel $-CH_2-$ ; $-CH_2-CH_2-$;

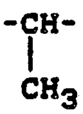 oder 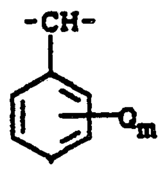

steht,
wobei Q für Chlor, Methyl, Methoxy, Methylthio oder Trifluormethyl steht und m für eine Zahl 0, 1 oder 2 steht und
$R^3$ für Wasserstoff, Methyl, Ethyl, n- oder i-Propyl, n-, i-, s- oder t-Butyl, n- oder i-Pentyl, n- oder i-Hexyl, Vinyl, 1-Propenyl, 2-Propenyl, Allyl, Propargyl, Trifluormethyl, Chlormethyl, Dichlormethyl, Methoxymethyl, Hydroxycarbonylmethyl, Methoxycarbonylmethyl, Ethoxycarbonylmethyl, Hydroxycarbonylethyl, Methoxycarbonylethyl, Ethoxycarbonylethyl, Methoxycarbonylaminomethyl, Ethoxycarbonylaminomethyl, Butoxycarbonylaminomethyl, für N,N-Dimethylcarbamoylmethyl, N,N-Diethylcarbamoylmethyl, für gegebenenfalls ein- bis zweifach durch Chlor oder Methyl substituiertes Benzyl, für Cyclopropyl, Cyclopentyl, Cyclohexyl oder für gegebenenfalls ein- bis dreifach, gleich oder verschieden substituiertes Phenyl steht, wobei als Substituenten infrage kommen: Fluor, Chlor, Brom, Methyl, Ethyl, Methoxy, Ethoxy, Methylthio, Acetamido oder Trifluormethyl oder für jeweils gegebenenfalls ein-oder zweifach durch Chlor und/oder Methyl substituiertes Furanyl, Thienyl oder Pyridyl steht,
deren geometrischen und optischen Isomere und Isomerengemische.

5. Verfahren zur Herstellung von 2-Cyano-2-oximinoacetamiden der allgemeinen Formel (I),

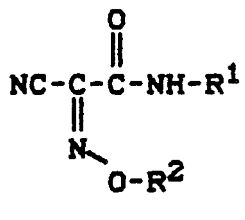

(I)

in welcher
$R^1$ für einen Rest
$-A-\overset{\overset{O}{\|}}{C}-R^3$ oder für einen gegebenenfalls substituierten Rest

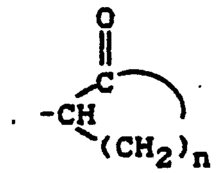

steht,
$R^2$ für Alkyl, Alkenyl, Alkinyl, Halogenalkyl, Halogenalkenyl, Cyanalkyl, Alkoxyalkyl, Alkanoylalkyl, Alkoxycarbonylalkyl, Alkylcarbonyloxyalkyl oder für jeweils gegebenenfalls substituiertes Aralkyl, Cycloalkylalkyl, Heterocyclylalkyl oder Cycloalkyl steht, wobei
A für einen gegebenenfalls substituierten Alkylenrest steht,
n für eine Zahl 2, 3, 4 oder 5 steht und
$R^3$ für Wasserstoff, Alkyl, Alkenyl, Alkinyl, Halogenalkyl, Halogenalkenyl, Cyanalkyl, Alkoxyalkyl, Alkylthioalkyl, Alkanoylalkyl, Hydroxycarbonylalkyl, Alkoxycarbonylalkyl, Alkylcarbonyloxyalkyl, Alkanoylaminoalkyl, Alkoxycarbonylaminoalkyl oder für gegebenenfalls substituiertes Carbamoylalkyl steht;
$R^3$ außerdem für jeweils gegebenenfalls substituiertes Aralkyl, Cycloalkylalkyl oder Heterocyclylalkyl steht und schließlich für jeweils gegebenenfalls substituiertes Aryl, Cycloalkyl, Cycloalkenyl oder Heterocyclyl steht,
deren geometrischen und optischen Isomere und Isomerengemische, dadurch gekennzeichnet, daß man 2-Cyano-2-oximino-acetamide der allgemeinen Formel (I),

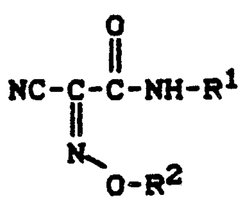

(I)

in welcher
$R^1$ und $R^2$ die oben angegebene Bedeutung haben, erhält,
wenn man
(a) 2-Cyano-2-oximinoessigsäurederivate der Formel (II),

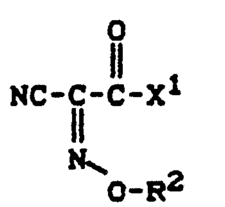

(II)

in welcher
$R^2$ die oben angegebene Bedeutung hat und
$X^1$ für eine geeignete Abgangsgruppe steht,
mit Aminoverbindungen der Formel (III),

$H_2N - R^1$ (III)

in welcher
$R^1$ die oben angegebene Bedeutung hat,
oder deren Säureadditionssalzen gegebenenfalls in Gegenwart eines Verdünnungsmittels, gegebenenfalls in Gegenwart eines Kondensationsmittels und gegebenenfalls in Gegenwart eines Reaktionshilfsmittels umsetzt, oder wenn man

(b) Oximinoacetamid-Derative der Formel (IV),

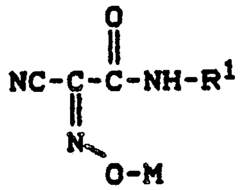

(IV)

in welcher
$R^1$ die oben angegebene Bedeutung hat und
M für Wasserstoff oder für ein Alkalimetallkation steht,
mit Alkylierungsmitteln der Formel (V),

$R^2 - X^2$ (V)

in welcher
$R^2$ die oben angegebene Bedeutung hat und
$X^2$ für eine elektronenanziehende Abgangsgruppe steht,
gegebenenfalls in Gegenwart eines Verdünnungsmittels und gegebenenfalls in Gegenwart eines Reaktionshilfsmittels umsetzt, oder wenn man

(c) Oximinoacetamid-Derative der Formel (VI),

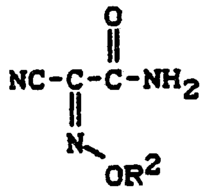

(VI)

in welcher
$R^2$ die oben angegebene Bedeutung hat,
mit Alkylierungsmitteln der Formel (VII),

$R^1 - X^3$ (VII)

in welcher
$R^1$ die oben angegebene Bedeutung hat und
$X^3$ für eine elektronenanziehende Abgangsgruppe steht,
gegebenenfalls in Gegenwart eines Verdünnungsmittels und gegebenenfalls in Gegenwart eines Reaktionshilfsmittels umsetzt, oder man 2-Cyano-2-oximinoacetamide der Formel (Ia),

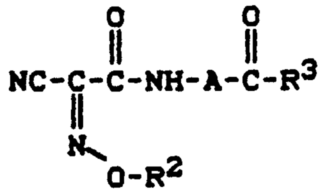

(Ia)

in welcher
$R^2$, $R^3$ und A die oben angegebene Bedeutung haben,
alternativ auch erhält, wenn man

(d) Oximinoacetamid-Derivate der Formel (VIII),

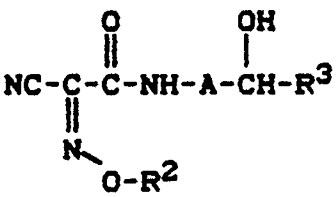

(VIII)

in welcher
$R^2$, $R^3$ und A die oben angegebene Bedeutung haben,
mit einem Oxidationsmittel, gegebenenfalls in Gegenwart eines Verdünnungsmittels und gegebenenfalls in Gegenwart eines Reaktionshilfsmittels umsetzt, oder wenn man

e) Oximinoacetamido-carbonsäuren der Formel (IX),

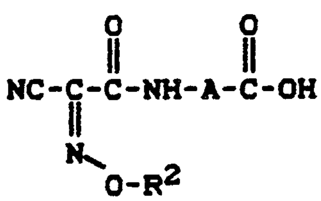

(IX)

in welcher
$R^2$ und A die oben angegebene Bedeutung haben,
mit Carbonsäurederivaten der Formel (X),

$R^3-\overset{\overset{O}{\|}}{C}-X^4$ (X)

in welcher
$X^4$ für Halogen oder für den Rest
$-O-\overset{\overset{O}{\|}}{C}-R^3$ steht und
$R^3$ die oben angegebene Bedeutung hat,
gegebenenfalls in Gegenwart eines Verdünnungsmittels und gegebenenfalls in Gegenwart eines Reaktionshilfsmittels umsetzt.

6. Schädlingsbekämpfungsmittel, gekennzeichnet durch einen Gehalt an mindestens einem 2-Cyano-2-oximinoacetamid der Formel (I) nach den Ansprüchen 1 und 5.

7. Verwendung von 2-Cyano-2-oximino-acetamiden der Formel (I) nach den Ansprüchen 1 und 5 zur Bekämpfung von Schädlingen.

8. Verfahren zur Bekämpfung von Schädlingen, dadurch gekennzeichnet, daß man ein 2-Cyano-2-oximino-acetamid der Formel (I) nach den Ansprüchen 1 und 5 auf Schädlinge und/oder ihren Lebensraum einwirken läßt.

9. Verfahren zur Herstellung von Schädlingsbekämpfungsmitteln, dadurch gekennzeichnet, daß man 2-Cyano-2-oximino-acetamide der Formel (I) nach den Ansprüchen 1 und 5 mit Streckmitteln und/oder oberflächenaktiven Mitteln vermischt.

10. Oximinoacetamide der Formel (IV)

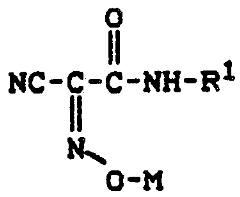

(IV)

in welcher

$R^1$ für einen Rest

$-A-\overset{O}{\overset{\|}{C}}-R^3$ oder für einen gegebenenfalls substituierten Rest

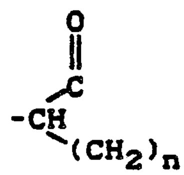

steht und

A für einen gegebenenfalls substituierten Alkylenrest steht,

n für eine Zahl 2, 3, 4 oder 5 steht,

$R^3$ für Wasserstoff, Alkyl, Alkenyl, Alkinyl, Halogenalkyl, Halogenalkenyl, Cyanalkyl, Alkoxyalkyl, Alkylthioalkyl, Alkanoylalkyl, Hydroxycarbonylalkyl, Alkoxycarbonylalkyl, Alkylcarbonyloxyalkyl, Alkanoylaminoalkyl, Alkoxycarbonylaminoalkyl oder für gegebenenfalls substituiertes Carbamoylalkyl steht;

$R^3$ außerdem für jeweils gegebenenfalls substituiertes Aralkyl, Cycloalkylalkyl oder Heterocyclylalkyl steht und schließlich für jeweils gegebenenfalls substituiertes Aryl, Cycloalkyl, Cycloalkenyl oder Heterocyclyl steht und

M für Wasserstoff oder für ein Alkalimetallkation steht.

11. Verfahren zur Herstellung von Oximinoacetamiden der Formel (IV)

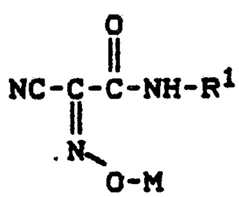

(IV)

in welcher

$R^1$ für einen Rest

$-A-\overset{O}{\overset{\|}{C}}-R^3$ oder für einen gegebenenfalls substituierten Rest

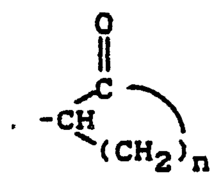

steht und
A für einen gegebenenfalls substituierten Alkylenrest steht,
n für eine Zahl 2, 3, 4 oder 5 steht,
$R^3$ für Wasserstoff, Alkyl, Alkenyl, Alkinyl, Halogenalkyl, Halogenalkenyl, Cyanalkyl, Alkoxyalkyl, Alkylthioalkyl, Alkanoylalkyl, Hydroxycarbonylalkyl, Alkoxycarbonylalkyl, Alkylcarbonyloxyalkyl, Alkanoylaminoalkyl, Alkoxycarbonylaminoalkyl oder für gegebenenfalls substituiertes Carbamoylalkyl steht;
$R^3$ außerdem für jeweils gegebenenfalls substituiertes Aralkyl, Cycloalkylalkyl oder Heterocyclylalkyl steht und schließlich für jeweils gegebenenfalls substituiertes Aryl, Cycloalkyl, Cycloalkenyl oder Heterocyclyl steht und
M für Wasserstoff oder für ein Alkalimetallkation sthet, dadurch gekennzeichnet, daß man Cyanessigsäure oder aktivierte Derivate der Cyanessigsäure der Formel (XI)

$$NC - CH_2 - \overset{\overset{O}{\|}}{C} - X^1 \qquad (XI)$$

in welcher
$X^1$ für eine aktivierende Abgangsgruppe steht,
mit Aminen der Formel (III),

$$H_2N - R^1 \qquad (III)$$

in welcher
$R^1$ die oben angegebene Bedeutung hat,
gegebenenfalls in Gegenwart eines Verdünnungsmittels und gegebenenfalls in Gegenwart eines Säurebindemittels bei Temperaturen zwischen -40 °C und +50 °C umsetzt und
die so erhältlichen 2-Cyanacetamide der Formel (XII),

$$NC - CH_2 - \overset{\overset{O}{\|}}{C} - NH - R^1 \qquad (XII)$$

in welcher
$R^1$ die oben angegebene Bedeutung hat,
in einer 2. Stufe mit einer Nitritverbindung der Formel (XIII),

$$R-O-N = O \qquad (XIII)$$

in welcher
R für ein Alkalimetallkation oder für einen Alkylrest steht,
gegebenenfalls in Gegenwart eines Verdünnungsmittels, gegebenenfalls in Gegenwart einer Katalysatorsäure, oder alternativ in Gegenwart einer Base bei Temperaturen zwischen -20 °C und +120 °C umsetzt.

Europäisches Patentamt

# EUROPÄISCHER RECHERCHENBERICHT

Nummer der Anmeldung

EP 88 11 2885

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 201 999 (ICI)<br>* Tabelle Seite 11, Verbindung 17 *<br>--- | 1 | C 07 C 131/00<br>A 01 N 37/50 |
| A | EP-A-0 206 004 (BAYER)<br>* Anspruch 1 *<br>--- | 1 | |
| A | EP-A-0 000 023 (BAYER)<br>* Anspruch 1 *<br>--- | 1 | |
| A,P | EP-A-0 259 737 (BAYER)<br>* Tabelle, Beispiele Nr. 59,72,73,132,140,158,214,223,235,246 *<br>----- | 1 | |

RECHERCHIERTE SACHGEBIETE (Int. Cl.4)

C 07 C 131/00
A 01 N 37/50

Der vorliegende Recherchenbericht wurde für alle Patentansprüche erstellt

| Recherchenort | Abschlußdatum der Recherche | Prüfer |
|---|---|---|
| BERLIN | 02-11-1988 | KAPTEYN H G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)